# EUROPEAN PATENT SPECIFICATION

(11) **EP 3 661 263 B1**
(45) Date of publication and mention of the grant of the patent: **08.06.2022**
(21) Application number: 17928905.3
(22) Date of filing: 20.10.2017
(51) Int. Cl.: H04W 36/00, H04W 36/14

(54) **METHOD AND DEVICE FOR HANDING OVER SERVICE BEARER NETWORK**
VERFAHREN UND VORRICHTUNG FÜR HANDOVER EINES DIENSTTRÄGERNETZWERKS
PROCÉDÉ ET DISPOSITIF DE TRANSFERT DE RÉSEAU SUPPORT DE SERVICE

(43) Date of publication of application: 03.06.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2017/107089
(87) International publication number: WO 2019/075741

(56) References cited:
- WO-A1-2016/073087
- CN-A- 105 898 805
- "3rd Generation Partnership Project; Technical Specification Group Services and System Aspects; System Architecture for the 5G System; Stage 2 (Release 15)", 3GPP STANDARD ; TECHNICAL SPECIFICATION ; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.2.0, 26 July 2017 (2017-07-26), pages 1-166, XP051336684, [retrieved on 2017-07-26]
- "3rd Generation Partnership Project; Technical Specification Group Services and System Aspects; Procedures for the 5G System; Stage 2 (Release 15)", 3GPP STANDARD ; TECHNICAL SPECIFICATION ; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.2.0, 22 September 2017 (2017-09-22), pages 1-165, XP051337116, [retrieved on 2017-09-22]
- SHARP ET AL: "380 response to non UE detected IMS emergency call via 5G", 3GPP DRAFT; C1-173898, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Kochi (India); 20171023 - 20171027 16 October 2017 (2017-10-16), XP051349752, Retrieved from the Internet: URL:http://www.3gpp.org/ftp/tsg_ct/WG1_mm- cc-sm_ex-CN1/TSGC1_106_Kochi/docs/ [retrieved on 2017-10-16]
- CHINA TELECOM: "Service based Inter-RAT cell reselection", 3GPP DRAFT; R2-1710726-SERVICE BASED INTER-RAT CELL RESELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech; 20171009 - 20171014 8 October 2017 (2017-10-08), XP051342752, Retrieved from the Internet: URL:http://www.3gpp.org/ftp/Meetings_3GPP_ SYNC/RAN2/Docs/ [retrieved on 2017-10-08]
- INTEL ET AL: "EPS fallback", 3GPP DRAFT; S2-174550_23501_IWK_FALLBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose Del Cabo, Mexico; 20170626 - 20170630 25 June 2017 (2017-06-25), XP051303396, Retrieved from the Internet: URL:http://www.3gpp.org/ftp/Meetings_3GPP_ SYNC/SA2/Docs/ [retrieved on 2017-06-25]
- QUALCOMM INCORPORATED: "TS 23.501: Voice Domain selection for 5GS", 3GPP DRAFT; S2-173126-VOICE DOMAIN SELECTION-R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Hangzhou; 20170515 - 20170519 14 May 2017 (2017-05-14), XP051281631, Retrieved from the Internet: URL:http://www.3gpp.org/ftp/Meetings_3GPP_ SYNC/SA2/Docs/ [retrieved on 2017-05-14]
- HUAWEI: "Iu-CS based CS Fallback Architecture", 3GPP TSG SA WG2 Meeting #63 TD S2-081079, 22 February 2008 (2008-02-22), XP050264081,
- QUALCOM INCORPORATED: "TS 23.501: Voice Domain Selection for 5GS", SA WG2 Meeting #121 S2-173126, 19 May 2017 (2017-05-19), XP051281631,
- NOKIA et al.: "TS 23.501: Updates to Emergency Services - Fall Back Considerations", SA WG2 Meeting #122bis S2-175969, 25 August 2017 (2017-08-25), XP051325814,
- "3rd Generation Partnership Project; Technical Specification Group Services and System Aspects; System Architecture for the 5G System; Stage 2 (Release 15)", 3GPP DRAFT; 23501-140-CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 28 September 2017 (2017-09-28), XP051359414, Retrieved from the Internet: URL:http://www.3gpp.org/ftp/tsg_sa/WG2_Arc h/Latest_SA2_Specs/Latest_draft_S2_Specs/ [retrieved on 2017-09-28]

## Description

### TECHNICAL FIELD

The present disclosure relates to the field of wireless communication technology, and in particular, to a method for a service bearer network handover, a session management function (SMF) and a core access and mobility management function (AMF).

### BACKGROUND

With the development of communication technology, research on the fifth Generation mobile communication technology (5G, 5^{th} Generation) has also been conducted. The wireless access of 5G is called New Radio, NR for short. 5G has the advantages of ultrahigh data transmission rate, massive numbers of data connection, lower data transmission delay, or the like.

At the initial stage of the construction of the current 5G network, the 5G network can only support a data service, but cannot support a voice service, thereby causing difficulty in deployment of the 5G network.

3GPP TS23.501 discloses UE radio capability handling the aspects of UE radio capability information storage in the AMF and feature specific UE/RAN radio information and compatibility request.

3GPP TS23.502 discloses a feature specific UE/RAN radio information and compatibility request procedure which is typically used during registration procedure and effected if the AMF requires specific information on the UE radio capabilities support and/or compatibility with NG-RAN support for a specific feature.

C1-173898 states that SA2 has defined falling back to EPS requirement for normal voice call and for emergency call.

R2-1710726 discloses that before "VoNR" is finished, the UE may have to fall back to VoLTE. In 4G RAN, CS fall back is introduced to solve the similar issue. A service triggered inter-RAT cell selection is proposed.

S2-174550 discloses the proposal to allow "voice centric" UE in the 5G system to fall back to EPS only for the duration of a voice call.

S2-173126 discloses a combined and a separated approach for providing voice domain selection in 5GS, since there is no support of CSFB in 5GS.

### SUMMARY

The invention is defined by the independent claims.

Technical solutions of the present disclosure can be implemented as follows:
the present disclosure provides a method for a service bearer network handover, which the method is applied to a session management function (SMF) in a 5G network architecture, where the method includes:
receiving a request information for establishing a service-specific bearer or a handover indication for the service-specific bearer for a user equipment (UE); where the handover indication for the service-specific bearer is used to indicate a service of which the service-specific bearer needs a handover from 5G to fourth Generation mobile communication technology (4G, 4^{th} Generation) or second Generation mobile communication technology (2G, 2^{nd} Generation)/third Generation mobile communication technology (3G, 3^{rd} Generation), or to indicate a handover of a whole service system from 5G to 4G or 2G/3G;
acquiring service support capability indication information of the UE from pre-obtained service support capability indication information about the UE; and
transmitting a system handover request message for the request information or the handover indication based on the service support capability indication information of the UE.

The present disclosure further provides an SMF, including: a first receiving part, an acquiring part and a first transmitting part; where
the first receiving part is configured to receive a request information for establishing a service-specific bearer or a handover indication for the service-specific bearer for a user equipment (UE); where the handover indication for the service-specific bearer is used to indicate a service of which the service-specific bearer needs a handover from 5G to 4G or 2G/3G, or to indicate a handover of a whole service system from 5G to 4G or 2G/3G;
the acquiring part is configured to acquire service support capability indication information of the UE from pre-obtained service support capability indication information about the UE; and
the first transmitting part is configured to transmit a system handover request message for the request information or the handover indication based on the service support capability indication information of the UE.

The present disclosure further provides an AMF, including: a second receiving part and a second transmitting part; where
the second receiving part is configured to receive service support capability indication information of a UE transmitted by the UE and/or an old AMF in a registration procedure of the UE; or receive the service support capability indication information of the UE transmitted by the UE in a session establishment procedure for the UE; and
the second transmitting part is configured to transmit the service support capability indication information of the UE to a session management function (SMF); where the service support capability indication information of the UE is used for the SMF to perform a system handover when a service-specific bearer is established for the UE.

### BRIEF DESCRIPTION OF DRAWINGS

The invention is presented in figures 2, 13 and 15.
FIG. 1 is a schematic diagram of an atypical 5G network infrastructure;
FIG. 2 is a schematic flowchart of a method for a service bearer network handover provided by the present disclosure;
FIG. 3 is a schematic flowchart of another method for a service bearer network handover provided by the present disclosure;
FIG. 4 is a schematic flowchart of still another method for a service bearer network handover provided by the present disclosure;
FIG. 5 is a schematic flowchart of a way to execute a CSFB procedure provided by the present disclosure;
FIG. 6 is a schematic flowchart of another way to execute a CSFB procedure provided by the present disclosure;
FIG. 7 is a schematic flowchart of a first specific example provided by the present disclosure;
FIG. 8 is a schematic flowchart of a second specific example provided by the present disclosure;
FIG. 9 is a schematic flowchart of a third specific example provided by the present disclosure;
FIG. 10 is a schematic flowchart of a fourth specific example provided by the present disclosure;
FIG. 11 is a schematic flowchart of a network fallback when an MO UE performs a voice service provided by the present disclosure;
FIG. 12 is a schematic flowchart of a network fallback when an MT UE performs a voice service provided by the present disclosure;
FIG. 13 is a schematic diagram of a composition of a network apparatus provided by the present disclosure;
FIG. 14 is a schematic diagram of a specific hardware structure of a network apparatus provided by the present disclosure;
FIG. 15 is a schematic diagram of a composition of another network apparatus provided by the present disclosure;
FIG. 16 is a schematic diagram of a specific hardware structure of another network apparatus provided by the present disclosure;
FIG. 17 is a schematic diagram of a composition of still another network apparatus provided by the present disclosure; and
FIG. 18 is a schematic diagram of a specific hardware structure of still another network apparatus provided by the present disclosure.

### DESCRIPTION OF EMBODIMENTS

Present invention is described in detail in embodiments 1, 5 and 6. All of the following other embodiments, examples or aspects are only for illustrative purposes.

In order to have a more detailed understanding of the features and technical contents of the present disclosure, the following is a detailed description of the implementation of the present disclosure in combination with the accompanying drawings. The accompanying drawings is used for reference only, rather than for defining the present disclosure.

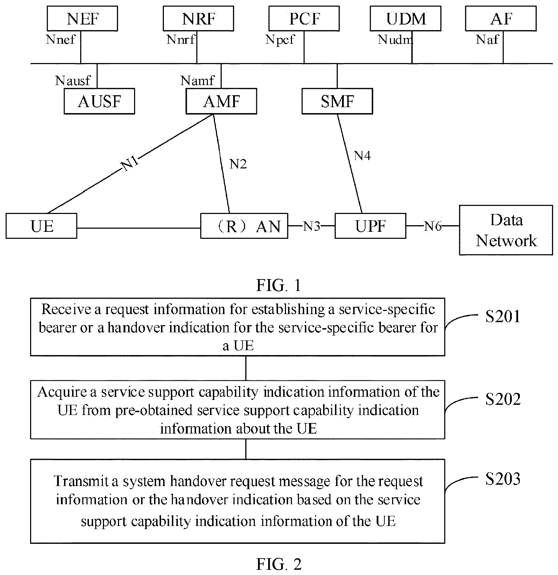

Referring to FIG. 1, an atypical 5G network infrastructure, referred to as a Service-Based Architecture (SBA), is shown. As shown in FIG. 1, a User Equipment (UE) is accessed to a Core Access and mobility Management Function (AMF) through a (Radio) Access Network ((R) AN), and the User Equipment (UE) may also be directly accessed to the AMF; the AMF is configured to process a control plane message of a network, and has a function similar to an Evolved Packet System (EPS) Mobility Management (EMM) in a Mobility Management Entity (MME) in a Long Term Evolution (LTE) system. An Authentication Service Function (AUSF) is similar to a health feature of the MME in the LTE system, implements a bidirectional authentication for the UE, and supports a unified authentication framework. A User plane Function (UPF) is similar to an integration of a server gateway S-GW and a Public Data Network (PDN) gateway (P-GW) in the LTE system, and is connected to a Data Network. A Session Management Function (SMF) is similar to an EPS session Management (ESM) Function in the LTE system, and mainly manages, establishes, modifies and releases a session. It can be seen that a functional set of AUSF, AMF and SMF is similar to the MME in the LTE system. In addition, the structure shown in FIG. 1 further includes: a Network Exposure Function (NEF), a Network Element (NE) Repository Function (NRF), a Policy Control Function (PCF), a Unified Data Management (UDM), and an Application Function (AF); where, the NEF is configured to externally expose some capabilities of the network functions, such as a monitoring capability, a supply capability, and a policy or charging capability; NRF can support a service discovery function; the PCF supports a unified policy framework that manages a network behavior; the UDM includes an application Front End (FE) and a User Data Repository (UDR), the FE can access subscription user information in the UDR, the function of the UDM is similar to that of an Home Subscriber Server (HSS) in the LTE system, the UDR provides a subscription data storage service, and the application Front End FE provides a data-based application logic; and the AF is configured to provide an application service.

Based on the above architecture, it should be noted that, in a 5G network, a terminal needs to register to the 5G network through a registration procedure to perform a 5G service. The registration procedure of 5G is different from an attachment procedure of a Long Term Evolution (LTE) system, which does not include a session establishment procedure, and after the registration of the terminal is completed, the AMF transmits information related to the session, for example, Non Stand Alone (NSA) information to the SMF through an N11-Request message of an N11 interface, and then the SMF determines whether to trigger the session establishment procedure.

The technical solutions of the present disclosure may be applied in the above-mentioned atypical 5G network infrastructure, and therefore, based on the above-mentioned structure, the following embodiments are proposed:

### Embodiment 1

Referring to FIG. 2, which shows a method for a service bearer network handover provided by the present disclosure, where the method is applied to a Session Management Function (SMF) in a 5G network architecture, and the method includes:
S201: receive a request information for establishing a service-specific bearer or a handover indication for the service-specific bearer for a UE;
it should be noted that the handover indication for the service-specific bearer is used to indicate a service of which the service-specific bearer needs a handover from 5G to 4G or 2G/3G, or to indicate a handover of a whole service system from 5G to 4G or 2G/3G;
S202: acquire a service support capability indication information of the UE from pre-obtained service support capability indication information about the UE; and
S203: transmit a system handover request message for the request information or the handover indication based on the service support capability indication information of the UE.

Specifically, a Voice over Internet Protocol (VoIP) service is borne in an LTE network architecture, while a circuit switched service is borne in a 2G or 3G network, and when a UE performs a voice service, a network type borne by the service needs to be determined. Therefore, first, a service support capability of the UE needs to be known, and therefore, taking the voice service as an example, the service support capability indication information of the UE may include: indication information used to indicate that the UE needs a voice service and only supports a VoIP service, indication information used to indicate that the UE needs the voice service and only supports a circuit switched service, indication information used to indicate that the UE needs the voice service and supports the Voice over Internet Protocol VoIP service and the circuit switched service, or indication information used to indicate that the UE does not need the voice service, or indication information used to indicate a network bearing an emergency call service.

Specifically, the above five types of the service support capability indication information of the UE may be represented by setting a specific parameter value. For example: when the parameter value is set to be "0", it means that the UE needs the voice service and supports only an VoIP phone (including Voice over New Radio (VoNR), Voice over Long Term Evolution (VoLTE), Voice over Wireless Fidelity (VoWiFi), Voice over Evolved Universal Mobile Telecommunications System (UMTS) Terrestrial Radio Access (VoE-UTRA), or the like); when the parameter value is set to be "1", it means that the UE needs the voice service and only supports a circuit switched voice (including CSFB and 3G Circuit Switched (CS) domain calls); when the parameter value is set to be "2", it means that the UE needs the voice service and supports VoIP and circuit switched voices at the same time; when it is set to be "3", it means that the UE does not need the voice service; the indication information used to indicate the network bearing the emergency call service may be used to indicate that the network bearing the emergency call service is a 5G network or a 4G network or an 2G/3G network, and therefore, when the parameter value is set to be "4", it means that the emergency call service for the UE is borne through the 5G network; when the parameter value is set to be "5", it means that the emergency call service for the UE is borne through the 4G network; and when the parameter value is set to be "6", it means that the emergency call service for the UE is borne through the 2G/3G network.

For the five types of service support capability indication information of the UE, it can be known that, when the UE needs to perform the voice service, a target network type falling back from a 5G network can be determined according to the service support capability indication information of the UE, for example, falling back from the 5G network to the 4G network; or from the 5G network to the 2G or 3G; either the emergency call is borne through the 4G network or the emergency call is borne through the 2G/3G network. The network side can actively judge whether to trigger a fallback to the 2G or 3G or 4G of the UE, so that the voice service of the UE can be normal established in case the 5G network is guaranteed.

It should be noted that, the present disclosure take the voice service as an atypical example to illustrate the technical solution of the present disclosure, and it can be understood that the person skilled in the art can apply the technical solution of the present disclosure to other services under a guidance of the voice service example, and details of the present disclosure are not repeated herein again.

For various target network types, the transmitting a system handover request message for the request information or the handover indication based on the service support capability indication information of the UE includes:
when the service support capability indication information of the UE indicates that the UE supports the VoIP service or the indication information used to indicate the network bearing the emergency call service represents that the emergency call service is borne through a 4G network, transmitting first fallback indication information to a next generation radio access network NG-RAN through a core access and mobility management function (AMF); where the first fallback indication information is used to indicate a handover of the service-specific bearer from a 5G network to the 4G network or a handover of the service system from the 5G to the 4G; and
when the service support capability indication information of the UE is used to indicate that the UE only supports the circuit switched service or the indication information used to indicate the network bearing the emergency call service represents that the emergency call service is borne through an 2G/3G network, transmitting a second fallback indication information to the UE through the AMF; where the second fallback indication information is used to indicate a fallback of the service-specific bearer from the 5G network to the 2G or 3G network or a handover of the service system handover from the 5G to the 2G or 3G.

For the technical solution shown in FIG. 2, the pre-obtained service support capability indication information about the UE may be acquired by the SMF during a procedure of registration or session establishment of the UE. Therefore, in a first possible implementation, before the receiving a request information for establishing a service-specific bearer or a handover indication for the service-specific bearer for a user equipment UE, the method further includes:
receive the service support capability indication information of the UE transmitted by an AMF in a registration procedure of the UE.

In some embodiments, the receiving the service support capability indication information of the UE transmitted by an AMF includes:
receive an N11-Request message transmitted by the AMF and carrying the service support capability indication information of the UE; and
analyze the N11-Request message to obtain the service support capability indication information of the UE.

In a second possible implementation, before the receiving a request information for establishing a service-specific bearer or a handover indication for the service-specific bearer for a user equipment UE, the method further includes:
receive the service support capability indication information of the UE transmitted by an AMF and/or a UDM in a session establishment procedure for the UE.

In some embodiments, the receiving the service support capability indication information of the UE transmitted by an AMF and/or a UDM in a session establishment procedure for the UE includes:
receive a session management SM Request message transmitted by the AMF and carrying the service support capability indication information of the UE, and analyze the SM Request message to obtain the service support capability indication information of the UE; and/or
receive a Subscription data response message transmitted by the UDM and carrying the service support capability indication information of the UE, and analyze the Subscription data response message to obtain the service support capability indication information of the UE.

Through the above two possible implementations, taking the voice service as example, the SMF may determine, after acquiring the service support capability indication information of the UE in advance, whether a bearer of a voice service falls back from a 5G network to a 4G network or from the 5G network to a 2G or 3G network according to the service support capability indication information of the UE when the UE performs the voice services, thereby determining whether to transmit a first fallback indication information or a second fallback indication information. Therefore, the UE cannot sense a fallback of a service bearer network in the network side, and the UE also does not need to actively judge a initiating mode of the a voice service, thereby reducing a complexity of customizing and deploying the UE, and the network side may determine whether to trigger the fallback to ensure a successful establishment of a service connection according to a service support capability of the UE in combination with a service support capability of the network side itself.

### Embodiment 2

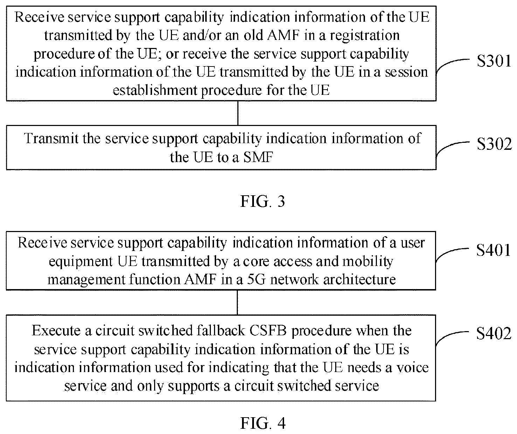

Based on the same technical concept as that of the foregoing embodiment, referring to FIG. 3, which shows a method for a service bearer network handover provided by the present disclosure, where the method is applied to a core access and mobility management function (AMF) in a 5G network architecture, and the method includes:
S301: receive service support capability indication information of a UE transmitted by the UE and/or an old AMF in a registration procedure of the UE; or receive the service support capability indication information of the UE transmitted by the UE in a session establishment procedure for the UE; and
S302: transmit the service support capability indication information of the UE to a session management function SMF;
where the service support capability indication information of the UE is used for the SMF to perform a system handover when a service-specific bearer is established for the UE.

For the technical solution shown in FIG. 3, taking a voice service as an example, the service support capability indication information of the UE includes: indication information used to indicate that the UE needs a voice service and only supports a VoIP service, indication information used to indicate that the UE needs the voice service and only supports a circuit switched service, indication information used to indicate that the UE needs the voice service and supports the Voice over Internet Protocol VoIP service and the circuit switched service, or indication information used to indicate that the UE does not need the voice service, or indication information used to indicate a network bearing an emergency call service.

For the technical solution shown in FIG. 3, in a specific implementation, the receiving service support capability indication information of a user equipment (UE) transmitted by the UE and/or an old AMF in a registration procedure of the UE may include:
receive a Registration Request message transmitted by the UE; where, the service support capability indication information of the UE is borne in the Registration Request message after being encapsulated by Network Attached Storage (NAS);
receive an Information Response message transmitted by the old AMF and bearing the service support capability indication information of the UE.

It can be understood that, when AMF migration or handover occurs, a current AMF in the technical solution shown in FIG. 3 transmits the Information Request message to the old AMF, and at this time, the old AMF will make the previously stored service support capability indication Information of the UE borne in the Information response message and return it to the current AMF

It should be noted that, since the service support capability indication information of the UE transmitted by the UE is higher in timeliness than the service support capability indication information of the UE transmitted by the old AMF, the service support capability indication information of the UE transmitted by the UE has a higher priority. Based on this, when the service support capability indication information of the UE respectively transmitted by the UE and the old AMF is received, the transmitting the service support capability indication information of the UE to a session management function SMF includes:
transmit the service support capability indication information of the UE transmitted by the UE to the SMF.

For the above specific implementations, in the registration procedure of the UE, the transmitting the service support capability indication information of the UE to a session management function SMF includes:
transmit an N11-Request message carrying the service support capability indication information of the UE to the SMF.

For the technical solution shown in FIG. 3, in a specific implementation, the receiving the service support capability indication information of the UE transmitted by the UE in a session establishment procedure for the UE includes:
receive a Protocol Data Unit PDU Session Establishment Request message transmitted by the UE, where the PDU Session Establishment Request message carries the service support capability indication information of the UE.

For the above specific implementations, in the session establishment procedure for the UE, the transmitting the service support capability indication information of the UE to a session management function SMF includes:
transmit a session management SM Request message carrying the service support capability indication information of the UE to the SMF.

Through the above specific implementations, it can be known that the SMF may perform a system handover when establishing a service-specific bearer for the UE according to the received service support capability indication information of the UE, and the procedure for the SMF to specifically determine the system handover may refer to the description in Embodiment 1, which is not repeated herein again, but for the AMF, after transmitting the service support capability indication information of the UE to the SMF, the method further includes:
receive a first fallback indication information transmitted by the SMF, and transmitting the first fallback indication information to a next generation radio access network NG-RAN; where the first fallback indication information is used to indicate a fall back of the service-specific bearer from a 5G network to a 4G network or a handover of a service system from 5G to 4G;
or receive a second fallback indication information transmitted by the SMF, and transmitting the second fallback indication information to the UE; where the second fallback indication information is used to indicate a fallback of the service-specific bearer from the 5G network to a 2G or 3G network or a handover of the service system handover from the 5G to the 2G or 3G.

In addition, in the procedure of performing the system handover, after receiving the first fallback indication information or the second fallback indication information, the method further includes:
transmit the service support capability indication information of the UE to a Mobility Management Entity MME;
where if the first fallback indication information is received, the service support capability indication information of the UE includes: indication information used to indicate that the UE needs a voice service and only supports a VoIP service, or indication information used to indicate that the UE needs the voice service and supports the Voice over Internet Protocol VoIP service and the circuit switched service, or indication information used to indicate a network bearing an emergency call service, which represents that the emergency call service is borne through a 4G network; and
if the second fallback indication information is received, the service support capability indication information of the UE is indication information used to indicate that the UE needs the voice service and only supports a circuit switched service, or indication information used to indicate a network bearing an emergency call service, which represents that the emergency call service is borne through an 2G/3G network.

It can be known that, the MME, after acquiring the service support capability indication information of the UE through the AMF, can perform service bearer after the handover from the 5G network to the 4G network. The procedure of the MME performing the service bearer refers to the Embodiment 3 followed.

### Embodiment 3

Based on the same technical concept as that of the foregoing embodiments, referring to FIG. 4, which shows a method for a service bearer network handover provided by the present disclosure, where the method is applied to a mobility management entity MME in a 4G network architecture, and the method includes:
S401: receive service support capability indication information of a user equipment UE transmitted by a core access and mobility management function (AMF) in a 5G network architecture; and
S402: execute a circuit switched fallback CSFB procedure when the service support capability indication information of the UE is indication information used to indicate that the UE needs a voice service and only supports a circuit switched service.

It should be noted that, in the technical solution shown in FIG. 4, a specific implementation of S401 may include: receive a Relocation Request transmitted by the AMF and carrying the service support capability indication information of the UE in a procedure of a handover from a 5G network to a 4G network.

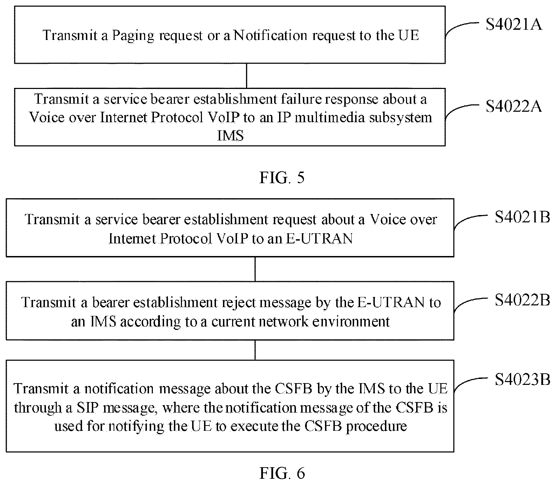

For the technical solution shown in FIG. 4, in a possible implementation, referring to FIG. 5, the executing a CSFB procedure includes:
S4021A: transmit a Paging request or a Notification request to the UE; where the Paging request or the Notification request is used to indicate the UE to execute the CSFB procedure; and
S4022A: transmit a service bearer establishment failure response about a Voice over Internet Protocol VoIP to an IP multimedia subsystem IMS.

It should be noted that, for the above implementations, the CSFB procedure is judged by the MME performing trigger.

For the technical solution shown in FIG. 4, in another possible implementation, referring to FIG. 6, the executing a CSFB procedure includes:
S4021B: transmit a service bearer establishment request about a Voice over Internet Protocol VoIP to an Evolved UMTS Terrestrial Radio Access Network (E-UTRAN);
S4022B: transmit a bearer establishment reject message by the E-UTRAN to an IMS according to a current network environment; and
S4023B: transmit a notification message about the CSFB by the IMS to the UE through a SIP message, where the notification message of the CSFB is used to notify the UE to execute the CSFB procedure.

It should be noted that, for the above implementation, the CSFB procedure is judged by the E-UTRAN performing trigger. It should be noted that, the transmitting a bearer establishment reject message by the E-UTRAN to an IMS according to a current network environment may include:
when the E-UTRAN does not support a VoIP service bearer establishment, transmit the bearer establishment reject message to the IMS; for example, an evolved node B (eNodeB) in the E-UTRAN does not have an associated License installed and thus cannot recognize a bearer establishment request for the Voice over Internet Protocol VoIP service;
or when a network environment of the E-UTRAN cannot meet a network environment required for the VoIP service bearer establishment, transmit the bearer establishment reject message to the IMS; for example, the network of the E-UTRAN is congested, such that it does not meet the network environment required for the VoIP service bearer establishment;
or when the UE is in a range of the E-UTRAN and a signal strength of the UE is lower than a preset strength threshold, transmit the bearer establishment reject message to the IMS; for example, the UE is in a weak coverage range of the E-UTRAN such that the eNodeB cannot establish a VoIP service bearer for the UE.

### Embodiment 4

Based on the same technical concept as that of the foregoing embodiments, the present embodiment illustrates the technical solutions of the foregoing three embodiments by the following specific examples. In the embodiment, a voice service is used as an atypical example to illustrate the technical solutions, and it can be understood that the person skilled in the art can apply the technical solution of the present disclosure to other services under a guidance of the voice service example, and details of the present disclosure are not repeated herein again.

First, the embodiment explains a procedure of an SMF obtaining service support capability indication information of a UE through a specific example 1 and a specific example 2; next, on the basis of the technical solutions of the specific example 1 and the specific example 2, the present embodiment explains, by a specific example 3, a procedure of a service bearer network handover in a voice service procedure of the UE; finally, the procedure of triggering CSFB after the voice service falls back from a 5G network to a 4G network is explained by a specific example 4.

### Specific Example 1

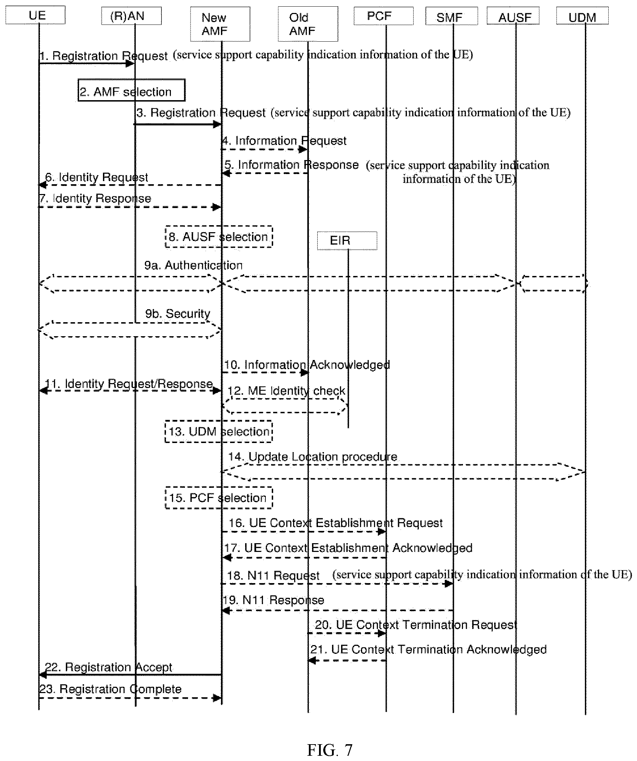

In the specific example, the SMF may obtain the service support capability indication information of the UE during the UE registration procedure, and the specific flow is shown in FIG. 7, and it should be noted that the flow of the technical solution shown in FIG. 7 is the same as a registration flow described in a Clause 4.2.2.2.2 section in the Technical Specification (TS) 23.502 version of the 3rd Generation Partnership Project (3GPP).

Firstly, in a UE registration procedure, the AMF may acquire the service support capability indication information of the UE, and the specific procedure is as follows:
the UE performs a NAS encapsulation on its own service support capability indication information and made it borne in Registration Request information; subsequently, the UE transmits the Registration Request message to an (R)AN; then, the (R)AN performs an AMF selection on the AMF, and then transmits the Registration Request message to the selected AMF, which is called new AMF in the specific example; therefore, the above steps realize that the new AMF acquires the service support capability indication information of the UE from the UE;
in addition, the new AMF may also transmit an Information Request to an old AMF, and receive an Information Response bearing the service support capability indication Information of the UE transmitted by the old AMF

It should be noted that, since old service support capability indication information of the UE stored in the old AMF may be used as an alternative solution when the new AMF cannot obtain the service support capability indication information from the UE. However, when the new AMF can obtain the service support capability indication information from the UE and also can acquire the service support capability indication information of the UE from the old AMF, the new AMF may consider that the service support capability indication information obtained from the UE has a higher priority, so as to ignore the service support capability indication information of the UE acquired from the old AMF

The above procedure describes a specific procedure in which the AMF acquires the service support capability indication information of the UE, and it can be understood that the above procedure corresponds to steps 1 to 5 in FIG. 7.

In addition, in the UE registration procedure, the new AMF transmits an Identity Request to the UE, and after receiving an Identity Response transmitted by the UE, the new AMF sequentially performs AUSF selection, UDM selection and PCF selection, and performs corresponding authentication, Update step and corresponding information request when each selection is completed. The specific steps are as steps 6 to 17 in FIG. 7, and it should be noted that specific meanings and implementations of steps 6 to 17 may refer to corresponding contents in 3GPP TS 23.502 clause 4.2.2.2.2, which is not repeated herein again.

After the above steps are executed, the new AMF may encapsulate the service support capability indication information of the UE in an N11-Request message and transmit the encapsulated service support capability indication information to the SMF, so that the SMF acquires the service support capability indication information of the UE, the procedure corresponds to step 18 in FIG. 7.

The SMF then transmits an N11-Response to the new AMF, as described in step 19. Then, the subsequent steps of the UE registration procedure, such as steps 20 to 23, are completed. It should be noted that the specific meanings and implementations of steps 19 to 23 may refer to corresponding contents in 3GPP TS 23.502 clause 4.2.2.2.2, which is not repeated herein again.

### Specific Example 2

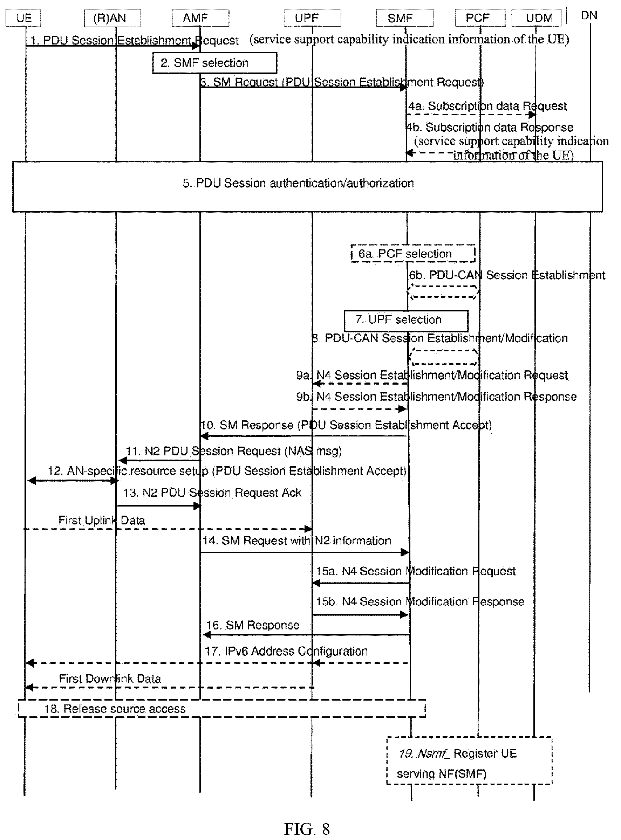

In the specific example, the SMF may obtain the service support capability indication information of the UE during a session establishment procedure of the UE, and the specific flow is as shown in FIG. 8, and it should be noted that the flow of the technical solution shown in FIG. 8 is the same as a session establishment flow described in a clause 4.3.2.2.1 section in the Technical Specification (TS) 23.502 version of the 3rd Generation Partnership Project (3GPP).

Firstly, an AMF obtains the service support ability indication information of the UE from the UE. Specifically, as in step 1, the UE transmits a PDU Session Establishment Request bearing its own service support ability indication information to the AMF; then, after completing an SMF selection according to step 2, the AMF transmits the PDU Session Establishment Request to a selected SMF through a Session Management SM Request, as in step 3; so that the SMF can obtain the service support capability indication information of the UE.

In addition, the SMF may also transmit a Subscription data Request message to a UDM, as in step 4a; subsequently, the UDM encapsulates the service support capability indication information of the UE in a Subscription data response message and transmits it to the SMF, as in step 4b, so that the SMF can obtain the service support capability indication information of the UE as well.

In FIG. 8, the specific meanings and implementations of the subsequent steps 5 to 19 may be refer to corresponding contents in 3GPP TS 23.502 clause 4.3.2.2.1, which is not repeated herein again.

### Specific Example 3

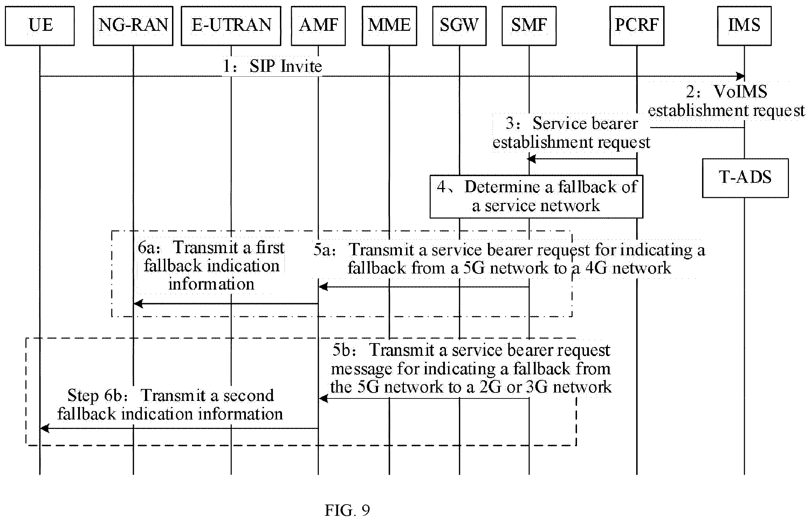

Through the solutions in the above two specific examples, the SMF obtains the service support capability indication information of the UE, so that the SMF may perform a handover for a network bearing a voice service in the voice service procedure of the UE based on the service support capability indication information of the UE. Taking the UE being a Mobile Origination Call (MO) UE as an example, the specific procedure is shown in FIG. 9:
step 1: the MO UE transmits a Session Initiation Protocol (SIP) Invite signaling for establishing a VoIMS (Voice over IMS) to the IMS in a calling procedure;
step 2: the IMS issues a VoIMS establishment request to a Policy and Charging Rules Function (PCRF) for requesting to establish a VoIMS-specific bearer;
step 3: the PCRF transmits a service bearer establishment request to the SMF;
step 4: the SMF determines a fallback of the service network according to the service support capability indication information of the UE;
when the service support capability indication information of the UE is used to indicate that the UE supports the VoIP service, the SMF determines to trigger a fallback from the 5G network to the 4G network, and then, as shown by the dot-dash line box in FIG. 9, step 5a: the SMF transmits a service bearer request for indicating a fallback from the 5G network to the 4G network to the AMF; step 6a: the AMF transmits a first fallback indication information to the NG-RAN; where, the first fallback indication information is used to indicate the fallback of the service-specific bearer from the 5G network to the 4G network or a handover of the service system from the 5G network to the 4G network;
when the service support capability indication information of the UE is used to indicate that the UE only supports the circuit switched service, the SMF determines to trigger a fallback from the 5G network to the 2G or 3G network, and then, as shown by the dashed line box in FIG. 9, step 5b: the SMF transmits a system handover request message for indicating the fallback from the 5G network to the 2G or 3G network to the AMF; step 6b: the AMF transmits a second fallback indication information to the UE; where the second fallback indication information is used to indicate that the fallback of the service-specific bearer from the 5G network to the 2G or 3G network, or a handover of the service system from the 5G network to the 2G or 3G network.

It should be noted that, for a Mobile Termination Call (MT) UE, the difference from the flow shown in FIG. 9 is that: the UE may receive a SIP Invite message in step 1. And consistent with other steps of the MO flow shown in FIG. 9, the IMS issues a VoIMS establishment request to the PCRF, and the SMF determines the fallback of the service network, which is not repeated again in this specific example.

### Specific Example 4

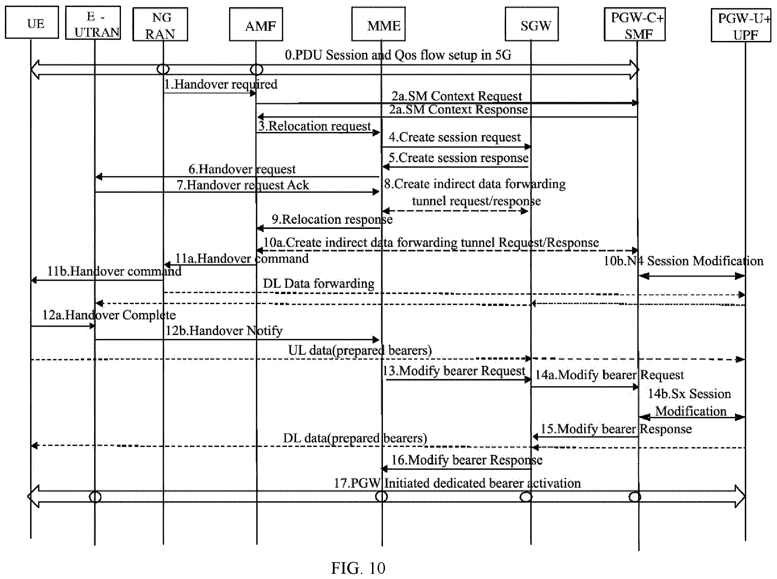

For the Specific Example 3, after the SMF determines the fallback from the 5G network to the 4G network, a flow of a specific handover from the 5G network to the 4G network is shown in FIG. 10, and the handover procedure shown in FIG. 10 is the same as the corresponding contents in the 3GPP TS 23.502, and is not repeated herein again.

It should be noted that in the flow shown in FIG. 10, the AMF may carry, in the Relocation Request message transmitted to the MME in step 3, the service support capability indication information of the UE, so that the MME determines, according to the service support capability indication information of the UE, whether to bear the voice service of the UE through the VoIP or the CSFB procedure falling back to a circuit switched.

### Specific Example 5

Based on the above Specific Example 3 and Specific Example 4, in this specific example, the MME can determine whether to trigger the CSFB procedure in the VoLTE bearer establishment procedure, and this specific example explains the flow of triggering the CSFB by two aspects in which UE is the MO UE and the MT UE.

### First aspect

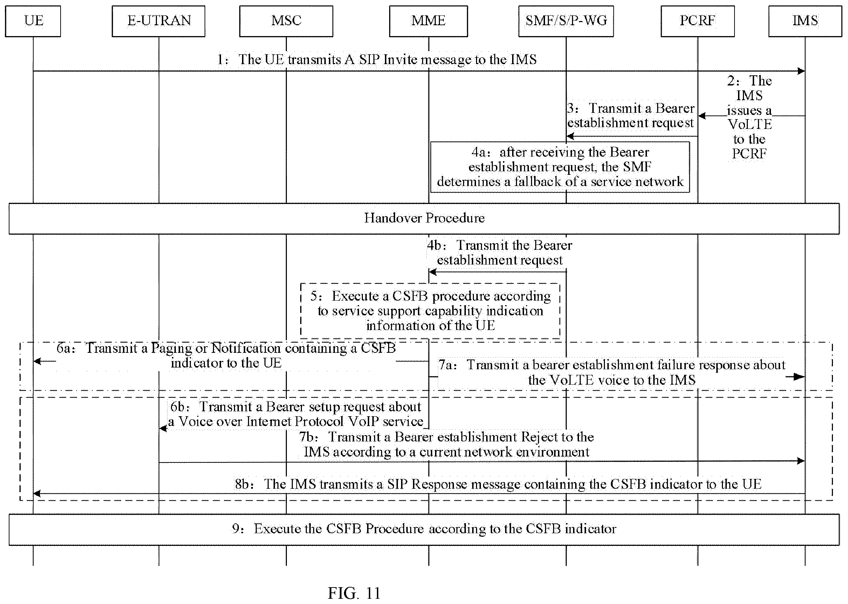

Referring to FIG. 11, which shows a network fallback procedure when the MO UE performs the voice service, the procedure may include:
step 1: the UE transmits a SIP invite message to the IMS; the message is used to request to establish a VoLTE call;
step 2: the IMS issues a VoLTE establishment request to the PCRF, for requesting to establish a VoLTE-specific bearer;
step 3: the PCRF transmits a Bearer establishment request to the SMF and a service or PDN Gateway (S/P-GW, Server/PDN Gateway); the request is used to request an establishment of a VoLTE-specific bearer;
step 4a: after receiving the Bearer establishment request, the SMF determines a fallback of the service network;
after step 4a, the Handover procedure may be executed according to the flow in Specific Example 4. In the handover procedure, the MME may acquire service support capability indication information of the UE from the AMF. After the handover procedure is completed, step 4b: the S/P-GW transmits the Bearer establishment request to the MME;
step 5: the MME executes a CSFB procedure according to the service support capability indication information of the UE.

Specifically, when the service support capability indication information of the UE acquired by the MME from the AMF is indication information for indicating that the UE only supports the circuit switched service, it indicates that the MME can acquire that the UE needs the voice service and only supports the circuit switched service, and thus, the CSFB procedure needs to be performed. The CSFB procedure may or may not be triggered by the MME. Thus, when the CSFB procedure is triggered by the MME, referring to the dot-dash line box in FIG. 11, step 6a: transmit a Paging request or a Notification request containing a CSFB indicator to the UE; where the CSFB indicator is used to indicate the UE to execute the CSFB procedure; step 7a: transmit a bearer establishment failure response about the VoLTE service to the IP multimedia subsystem IMS.

It can be understood that, after the UE receives the Paging or Notification request, step 9: the UE can execute the CSFB Procedure according to the CSFB indicator.

When the CSFB procedure is not triggered by the MME, referring to the dashed line box in FIG. 11, step 6b: MME transmits a Bearer setup request about a VoIP service to the E-UTRAN;
step7b: the E-UTRAN transmits a Bearer establishment reject message to the IMS according to a current network environment.

It can be understood that, for step 7b, in detail, when the eNodeB in the E-UTRAN does not support the specific bearer establishment, e.g. when an associated License is not installed so that the request cannot be recognized, or when the network of the eNodeB is congested so that a network environment required for the VoIP service bearer establishment is not met, or when the UE is in a weak coverage range so that the eNodeB cannot establish a bearer for the UE, the E-UTRAN transmits the Bearer establishment Reject to the IMS.

Step 8b: the IMS transmits an SIP Response message containing the CSFB indicator to UE; as shown in a dot-dash line box, the CSFB indicator is used to indicate the UE to execute the CSFB procedure.

It can be understood that, after the UE receives the SIP Response, step 9: the UE can execute the CSFB Procedure according to the CSFB indicator.

### Second aspect

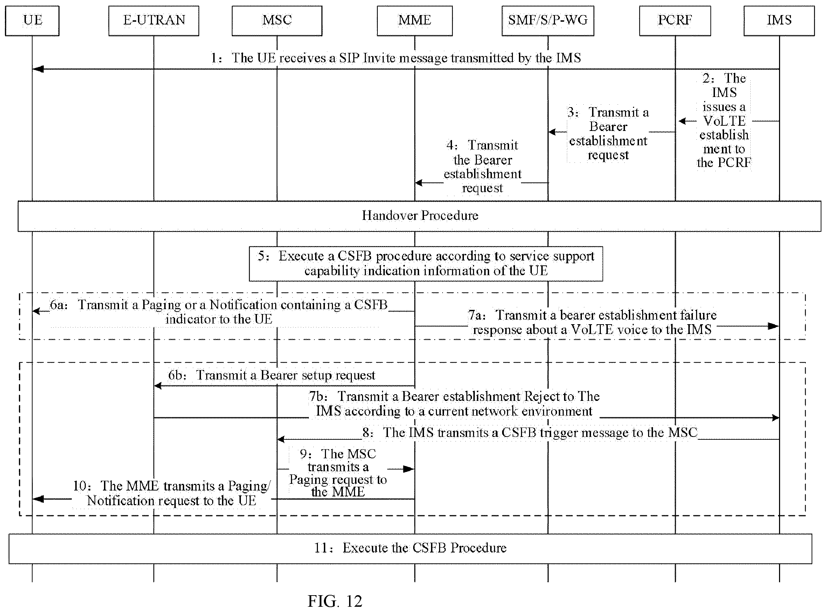

Referring to FIG. 12, which shows a procedure of a network fallback when the MT UE performs the voice service, the procedure may include:
step 1: the UE receives a SIP invite message transmitted by the IMS; the message is used to request to establish a VoLTE call;
step 2: the IMS issues a VoLTE establishment to the PCRF;
step 3: the PCRF transmits a Bearer establishment request to the SMF and the S/P-GW;
step 4: S/P-GW transmits a Bearer establishment request to the MME;
when the SMF receives the bearer establishment request, and after step 4, the handover procedure may be executed according to the flow in Specific Example 4.

Step 5: the MME executes a CSFB procedure according to service support capability indication information of the UE.

Specifically, the CSFB procedure may or may not be triggered by the MME. Thus, when the CSFB procedure is triggered by the MME, referring to the dashed line box in FIG. 12, step 6a: transmit a Paging request or a Notification request containing a CSFB indicator to the UE; step 7a: transmit a bearer establishment failure response about a VoLTE service to the IMS. After the UE receives the Paging or Notification request, step 11: the UE executes the CSFB Procedure.

When the CSFB procedure is not triggered by the MME, referring to the dashed line box in FIG. 12, step 6b: the MME transmits a Bearer setup request to the E-UTRAN.

Step 7b: E-UTRAN transmits a Bearer establishment Reject to IMS according to a current network environment.

It can be understood that the above steps 2 to 7b are the same as the corresponding parts of the first aspect, and are not repeated herein again.

After step 7b, step 8 is further included: the IMS transmits a CSFB trigger message to the Mobile Switching Center (MSC);
step 9: the MSC transmits a Paging request to MME;
step 10: the MME transmits a Paging/Notification request to the UE;
step 11: the UE executes the CSFB Procedure.

The embodiment explains the specific implementations of the technical solutions of the foregoing embodiments through the above specific examples. It can be understood that the above specific examples are merely atypical examples of the specific implementations, and do not limit the technical solutions of the foregoing embodiments.

### Embodiment 5

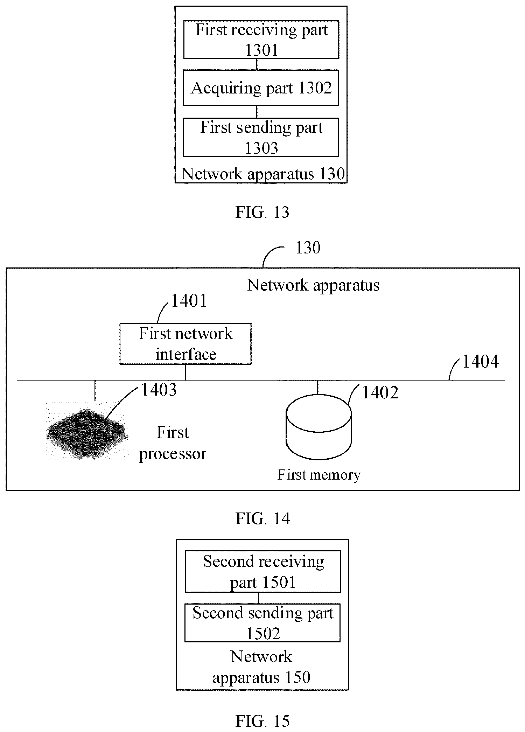

Referring to FIG. 13, which shows a composition of a network apparatus 130 provided by the present disclosure, the network apparatus 130 is an SMF in a 5G network architecture, where the network apparatus 130 includes: a first receiving part 1301, an acquiring part 1302, and a first transmitting part 1303; where
the first receiving part 1301 is configured to receive a request information for establishing a service-specific bearer or a handover indication for the service-specific bearer for a user equipment UE; where the handover indication for the service-specific bearer is used to indicate a service of which the service-specific bearer needs a handover from 5G to 4G or 2G/3G, or to indicate a handover of a whole service system from 5G to 4G or 2G/3G;
the acquiring part 1302 is configured to acquire service support capability indication information of the UE from pre-obtained service support capability indication information about the UE; and
the first transmitting part 1303 is configured to transmit a system handover request message for the request information or the handover indication based on the service support capability indication information of the UE.

In a possible implementation, the service support capability indication information of the UE includes: indication information used to indicate that the UE needs a voice service and only supports a VoIP service, indication information used to indicate that the UE needs the voice service and only supports a circuit switched service, indication information used to indicate that the UE needs the voice service and supports the Voice over Internet Protocol VoIP service and the circuit switched service, or indication information used to indicate that the UE does not need the voice service, or indication information used to indicate a network bearing an emergency call service.

In the foregoing implementations, the first transmitting part 1303 is configured to, when the service support capability indication information of the UE indicates that the UE supports the VoIP service or the indication information used to indicate the network bearing the emergency call service represents that the emergency call service is borne through a 4G network, transmit first fallback indication information to a next generation radio access network NG-RAN through a core access and mobility management function AMF; where the first fallback indication information is used to indicate a handover of the service-specific bearer from a 5G network to the 4G network or a handover of the service system from the 5G to the 4G; and
when the service support capability indication information of the UE indicates that the UE only supports the circuit switched service or the indication information used to indicate the network bearing the emergency call service represents that the emergency call service is borne through an 2G/3G network, transmitting a second fallback indication information to the UE through the AMF; where the second fallback indication information is used to indicate a fallback of the service-specific bearer from the 5G network to the 2G or 3G network or a handover of the service system handover from the 5G to the 2G or 3G.

In a possible implementation, the first receiving part 1301 is further configured to receive the service support capability indication information of the UE transmitted by an AMF in a registration procedure of the UE.

In the foregoing implementations, the first receiving part 1301 is configured to receive an N11-Request message transmitted by the AMF and carrying the service support capability indication information of the UE; and
analyze the N11-Request message to obtain the service support capability indication information of the UE.

In a possible implementation manner, the first receiving part 1301 is further configured to receive the service support capability indication information of the UE transmitted by an AMF and/or a Unified Data Management UDM in a session establishment procedure for the UE.

In the foregoing implementations, the first receiving part 1301 is configured to receive a session management SM Request message transmitted by the AMF and carrying the service support capability indication information of the UE, and analyze the SM Request message to obtain the service support capability indication information of the UE; and/or
receive a Subscription data response message transmitted by the UDM and carrying the service support capability indication information of the UE, and analyze the Subscription data response message to obtain the service support capability indication information of the UE.

It can be understood that in the present disclosure, "part" may be part of a circuit, part of a processor, part of a program or software, or the like, and may also be a unit, and may also be a modular or may also be non-modularized.

In addition, each component in the present disclosure may be integrated in one processing unit, or each unit may exist alone physically, or two or more units are integrated in one unit. The integrated unit can be implemented in a form of hardware or a form of a software functional module.

When the integrated unit is implemented in the form of the software functional module and traded, rather than used as a standalone product, it may be stored in a computer readable storage medium. Based on such understanding, the essence, or the part contributing to prior art, or all or part, of the technical solution of the present disclosure may embody in the form of software product. The computer software product described above is stored in a storage medium and includes instructions for causing a computing device (which may be a personal computer, a server, or a network device, or the like) or a processor to implement some or all of the steps in the methods of the present disclosure. The storage medium includes various medium that can store program codes, such as a USB disk, a portable hard disk, a read-only memory (ROM), a random access memory (RAM), a magnetic disk, or an optical disk, or the like.

Accordingly, the present disclosure provides a computer readable medium, stores with a program for a service bearer network handover, and the program for the service bearer network handover, when executed by at least one processor, implements the steps of the method according to Embodiment 1.

Based on the network apparatus 130 and the computer readable medium, referring to FIG. 14, which shows a specific hardware structure of the network apparatus 130 provided by the present disclosure, the network apparatus 130 may include: a first network interface 1401, a first memory 1402, and a first processor 1403; the various components are coupled together by a bus system 1404. It can be understood that the bus system 1404 is configured to enable communication connection between these components. The bus system 1404 includes a power bus, a control bus, and a status signal bus in addition to a data bus. The various buses are labeled as the bus system 1404 in FIG. 14 for the sake of clarity of illustration, where the first network interface 1401 is configured to receive and transmit a signal in a process of receiving and transmitting information with other external network elements;
the first memory 1402 is configured to store a computer program capable of running on the first processor 1403; and
the first processor 1403, when running the computer program, is configured to:
   receive a request information for establishing a service-specific bearer or a handover indication for the service-specific bearer for a user equipment UE; where the handover indication for the service-specific bearer is used to indicate a service of which the service-specific bearer needs a handover from 5G to 4G or 2G/3G, or to indicate a handover of a whole service system from 5G to 4G or 2G/3G;
   acquire service support capability indication information of the UE from pre-obtained service support capability indication information about the UE; and
   transmit a system handover request message for the request information or the handover indication based on the service support capability indication information of the UE.

It can be understood that the first memory 1402 in the present disclosure the memory in the present application may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory can be a random access memory (RAM) that acts as an external cache. By way of example rather than limitation, RAM of many forms are available, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM) and a direct rambus RAM (DRRAM). It should be noted that the first memory 1402 of the system and method described herein are intended to include, rather than being limited to, these and any other suitable types of memories.

The first processor 1403 may be an integrated circuitry chip capable of processing a signal. In the implementation process, each step of the above method may be accomplished by an integrated logic circuit of hardware in the first processor 1403, or instructions in the form of software. The first processor 1403 may be a general-purpose processor, a digital signal processor (DSP), an application specific integrated circuit (ASIC), a field programmable gate array (FPGA), or other programmable logic devices, discrete gates or transistor logic devices or discrete hardware components. The methods, steps, and logical block diagrams disclosed in the present disclosure can be implemented or executed. The general purpose processor may be a microprocessor, or the processor may also be any conventional processor or the like. The steps of the method disclosed with reference to the present disclosure may be directly embodied as being accomplished by the execution of the hardware decoding processor or by a combination of hardware and software modules in the processor. The software module may be located in a storage medium readily available in the art, such as a random access memory, a flash memory, a read only memory, a programmable read only memory or an electrically erasable programmable memory, a register, or the like. The storage medium is located in the first memory 1402. The first processor 1403 reads information in the first memory 1402 and accomplishes the steps of the above methods in combination with the hardware.

It can be understood that the present disclosure may be implemented in hardware, software, firmware, middleware, microcode, or any combination thereof. For a hardware implementation, the processing unit may be implemented within one or more Application Specific Integrated Circuits (ASICs), Digital Signal Processors (DSPs), DSP Devices (DSPDs), Programmable Logic Devices (PLDs), Field-Programmable Gate Arrays (FPGAs), general purpose processors, controllers, micro-controllers, microprocessors, other electronic units configured to execute the functions described in the present application or a combination thereof.

For a software implementation, the techniques described herein may be implemented through modules (e.g., procedures, functions, or the like) that perform the functions described herein. A software code may be stored in a memory and executed through a processor. The memory may be implemented within the processor or external to the processor.

Specifically, when the first processor 1403 in the network apparatus 130 is further configured to run the computer program, the steps of the method described in Embodiment 1 are executed, which is not repeated herein again.

### Embodiment 6

Based on the same technical concept as that of the foregoing embodiments, referring to FIG. 15, which shows a composition of a network apparatus 150 provided by the present disclosure, the network apparatus 150 is a AMF in a 5G network architecture, where the network apparatus 150 includes: a second receiving part 1501 and a second transmitting part 1502; where
the second receiving part 1501 is configured to receive service support capability indication information of a UE transmitted by the UE and/or an old AMF in a registration procedure of the UE; or receive the service support capability indication information of the UE transmitted by the UE in a session establishment procedure for the UE; and
configured to transmit the service support capability indication information of the UE to a session management function SMF; where the service support capability indication information of the UE is used for the SMF to perform a system handover when a service-specific bearer is established for the UE.

In the foregoing solution, the service support capability indication information of the UE includes: indication information used to indicate that the UE needs a voice service and only supports a VoIP service, indication information used to indicate that the UE needs the voice service and only supports a circuit switched service, indication information used to indicate that the UE needs the voice service and supports the Voice over Internet Protocol VoIP service and the circuit switched service, or indication information used to indicate that the UE does not need the voice service, or indication information used to indicate a network bearing an emergency call service.

In the foregoing solution, the second transmitting part 1502 is configured to transmit the service support capability indication information of the UE transmitted by the UE to the SMF.

In the foregoing solution, the second receiving part 1501 is configured to receive a Registration Request message transmitted by the UE through a radio access network RAN, where the Registration Request message carries the service support capability indication information of the UE; and/or
receive an Information Response message transmitted by the old AMF, where the Information Response message carries the service support capability indication Information of the UE.

In the foregoing solution, the second transmitting part 1502 is configured to transmit an N11-Request message carrying the service support capability indication information of the UE to the SMF.

In the foregoing solution, the second receiving part 1501 is configured to receive a Protocol Data Unit PDU Session Establishment Request message transmitted by the UE, where the PDU Session Establishment Request message carries the service support capability indication information of the UE.

In the foregoing solution, the second transmitting part 1502 is configured to transmit a session management SM Request message carrying the service support capability indication information of the UE to the SMF.

In the above solution, the second receiving part 1501 is configured to receive a first fallback indication information transmitted by the SMF, and the second transmitting part 1502 is configured to transmit the first fallback indication information to a next generation radio access network NG-RAN; where the first fallback indication information is used to indicate a fall back of the service-specific bearer from a 5G network to a 4G network or a handover of a service system from 5G to 4G;
or, the second receiving part 1501 is configured to receive a second fallback indication information transmitted by the SMF, and the second transmitting part 1502 is configured to transmit the second fallback indication information to the UE; where the second fallback indication information is used to indicate a fallback of the service-specific bearer from the 5G network to a 2G or 3G network or a handover of the service system handover from the 5G to the 2G or 3G.

In the foregoing solution, the second transmitting part 1502 is further configured to transmit the service support capability indication information of the UE to a mobility management entity MME;
where if the first fallback indication information is received, the service support capability indication information of the UE includes: indication information used to indicate that the UE needs a voice service and only supports a VoIP service, or indication information used to indicate that the UE needs the voice service and supports the Voice over Internet Protocol VoIP service and the circuit switched service, or indication information used to indicate a network bearing an emergency call service, which represents that the emergency call service is borne through a 4G network; and
if the second fallback indication information is received, the service support capability indication information of the UE is indication information used to indicate that the UE needs the voice service and only supports a circuit switched service, or indication information used to indicate a network bearing an emergency call service, which represents that the emergency call service is borne through an 2G/3G network.

Accordingly, the present disclosure provides a computer readable medium, stores with a program for a service bearer network handover, and the program for the service bearer network handover, when executed by at least one processor, implements the steps of the method according to Embodiment 2. For the specific description of the computer readable medium, reference is made to the description in Embodiment 5, and it is not repeated herein again.

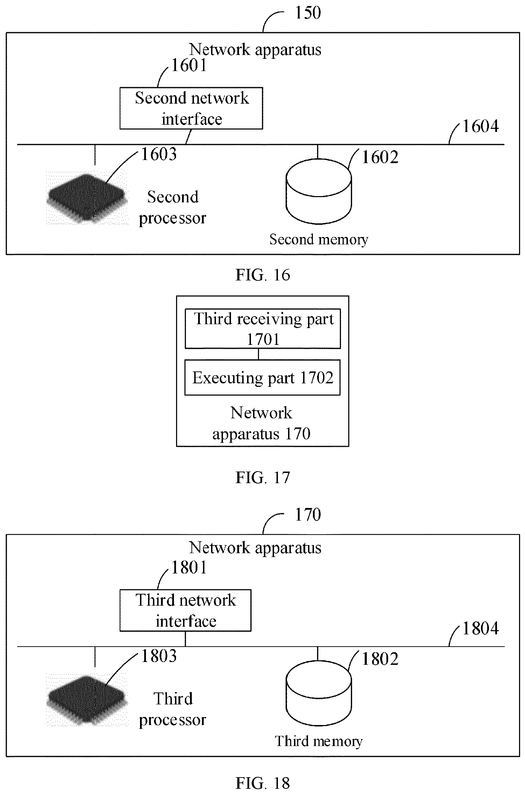

Based on the above-mentioned composition of the network apparatus 150 and the computer readable medium, referring to FIG. 16, a specific hardware structure of the network apparatus 150 provided by the present disclosure is shown, the network apparatus 150 may include:
a second network interface 1601, a second memory 1602, and a second processor 1603; the various components are coupled together by a bus system 1604. It can be understood that the bus system 1604 is configured to enable communication connection between these components. The bus system 1604 includes a power bus, a control bus, and a status signal bus in addition to a data bus. The various buses are labeled as the bus system 1604 in FIG. 16 for the sake of clarity of illustration, where
the second network interface 1601 is configured to receive and transmit a signal in a process of receiving and transmitting information with other external network elements;
the second memory 1602 is configured to store a computer program capable of running on the second processor 1603; and
the second processor 1603, when running the computer program, is configured to:
   receive service support capability indication information of a UE transmitted by the UE and/or an old AMF in a registration procedure of the UE; or receive the service support capability indication information of the UE transmitted by the UE in a session establishment procedure for the UE; and
   transmit the service support capability indication information of the UE to a session management function SMF; where the service support capability indication information of the UE is used for the SMF to perform a system handover when a service-specific bearer is established for the UE.

It can be understood that, in the present disclosure, the components in the specific hardware structure of the network apparatus 150 are similar to the corresponding components in Embodiment 5, and are not repeated herein again.

Specifically, the second processor 1603 in the network apparatus 150 is further configured to execute the steps of the method described in Embodiment 2 when running the computer program, which is not repeated herein again.

### Embodiment 7

Based on the same technical concept as that of the foregoing embodiments, referring to FIG. 17, which shows a composition of a network apparatus 170 provided by the present disclosure, the network apparatus 170 may include: a third receiving part 1701, an executing part 1702; where
the third receiving part 1701 is configured to receive service support capability indication information of a user equipment UE transmitted by a core access and mobility management function (AMF) in a 5G network architecture; and
the execution part 1702 is configured to execute a circuit switched fallback CSFB procedure when the service support capability indication information of the UE is indication information used to indicate that the UE needs a voice service and only supports a circuit switched service.

In the foregoing solution, the executing part 1702 is configured to transmit a Paging request or a Notification request to the UE; where the Paging request or the Notification request is used to indicate the UE to execute the CSFB procedure; and
transmitting a service bearer establishment failure response about a Voice over Internet Protocol VoIP to an IP multimedia subsystem IMS.

In the above solution, the executing part 1702 is configured to transmit a service bearer establishment request about a Voice over Internet Protocol VoIP to an Evolved UMTS Terrestrial Radio Access Network E-UTRAN; where after the service bearer establishment request is used for the E-UTRAN to transmit a service bearer establishment reject message to an IMS according to a current network environment, the IMS transmits a notification message about the CSFB to the UE through a SIP message, where the notification message of CSFB is used to notify the UE to execute the CSFB procedure.

In addition, the present disclosure provides a computer readable medium, stores with a program for a service bearer network handover, and the program for the service bearer network handover, when executed by at least one processor, implements the steps of the method according to Embodiment 3. For the specific description of the computer readable medium, reference is made to the description in Embodiment 5, and it is not repeated herein again.

Based on the above network apparatus 170 and the computer readable medium, referring to FIG. 18, which shows a specific hardware structure of the network apparatus 170 provided by the present disclosure, the network apparatus 170 may include:
a third network interface 1801, a third memory 1802, and a third processor 1803; the various components are coupled together by a bus system 1804. It can be understood that the bus system 1804 is configured to enable communication connection between these components. The bus system 1804 includes a power bus, a control bus, and a status signal bus in addition to a data bus. The various buses are labeled as the bus system 1804 in FIG. 18 for the sake of clarity of illustration, where
the third network interface 1801 is configured to receive and transmit a signal in a process of receiving and transmitting information with other external network elements;
the third memory 1802 is configured to store a computer program capable of running on the third processor 1803; and
the third processor 1803, when running the computer program, is configured to:
   receive service support capability indication information of a user equipment UE transmitted by a core access and mobility management function (AMF) in a 5G network architecture; and
   execute a circuit switched fallback CSFB procedure when the service support capability indication information of the UE is indication information used to indicate that the UE needs a voice service and only supports a circuit switched service.

It can be understood that, in the present disclosure, the components in the specific hardware structure of the network apparatus 170 are similar to the corresponding components in Embodiment 5, and are not repeated herein again.

Specifically, the third processor 1803 in the network apparatus 170 is further configured to execute the steps of the method described in Embodiment 3 when running the computer program, which is not repeated herein again.

The person skilled in the art should understand that the present disclosure may be provided as a method, system, or computer program product. Accordingly, the present disclosure may take the form of a hardware, a software, or a combination of the software and hardware. Furthermore, the present disclosure may take the form of a computer program product executed on one or more computer-usable storage media (including, but not limited to, a magnetic disk storage, an optical storage, or the like) having computer-usable program code therein.

The present disclosure is described with reference to flowcharts and/or block diagrams of methods, devices (systems), and computer program products of the present disclosure. It should be understood that each flow and/or block of the flowcharts and/or block diagrams, and combinations of the flow and/or block in the flowcharts and/or block diagrams, can be implemented by computer program instructions. These computer program instructions may be provided to a processor of a general purpose computer, a special purpose computer, an embedded processor, or other programmable data processing apparatus to produce a machine, such that the instructions executed via the processor of the computer or other programmable data processing apparatuses create an apparatus for implementing the functions specified in the one or more flows in the flowchart and/or one or more blocks in the block diagram.

These computer program instructions may also be stored in a computer readable memory capable of guiding a computer or other programmable data processing apparatuses to work in a specific way, so that the instructions stored in the computer readable memory generate a manufacturing article including an instruction apparatus, and the instruction apparatus implements the functions specified in the one or more flows in the flowchart and/or one or more blocks in the block diagram.

These computer program instructions may also be loaded onto a computer or other programmable data processing apparatuses to cause a series of operational steps are executed on the computer or other programmable apparatuses to produce a computer implemented process, such that the instructions executed on the computer or other programmable apparatuses provide steps for implementing the functions specified in the one or more flows in flowchart and/or one or more blocks in the block diagram.

The above description discloses some embodiments of the present disclosure, and is not intended to limit the protection scope of the present disclosure, which is defined by the claims.

## Claims

1. A method for a service bearer network handover, which is performed by a session management function, SMF, in a fifth Generation mobile communication technology, 5G, network architecture, the method comprises:
receiving (S201) a request information for establishing a service-specific bearer or a handover indication for the service-specific bearer for a user equipment, UE; wherein the handover indication for the service-specific bearer is used to indicate a service of which the service-specific bearer needs a handover from 5G to fourth Generation mobile communication technology, 4G, or second Generation mobile communication technology, 2G/third Generation mobile communication technology, 3G, or to indicate a handover of a whole service system from 5G to 4G or 2G/3G;
acquiring (S202) service support capability indication information of the UE from pre-obtained service support capability indication information about the UE; and
transmitting (S203) a system handover request message for the request information or the handover indication based on the service support capability indication information of the UE.

2. The method according to claim 1, wherein the service support capability indication information of the UE comprises: indication information used to indicate that the UE needs a voice service and only supports a Voice over Internet Protocol, VoIP, service, indication information used to indicate that the UE needs the voice service and only supports a circuit switched service, indication information used to indicate that the UE needs the voice service and supports the VoIP service and the circuit switched service, or indication information used to indicate that the UE does not need the voice service, or indication information used to indicate a network bearing an emergency call service;
wherein the transmitting a system handover request message for the request information or the handover indication based on the service support capability indication information of the UE (S203) comprises:
when the service support capability indication information of the UE indicates that the UE supports the VoIP service or the indication information used to indicate the network bearing the emergency call service represents that the emergency call service is borne through a 4G network, transmitting first fallback indication information to a next generation radio access network, NG-RAN, through a core access and mobility management function, AMF; wherein the first fallback indication information is used to indicate a handover of the service-specific bearer from a 5G network to the 4G network or a handover of the service system from the 5G to the 4G; and
when the service support capability indication information of the UE indicates that the UE only supports the circuit switched service or the indication information used to indicate the network bearing the emergency call service represents that the emergency call service is borne through an 2G/3G network, transmitting a second fallback indication information to the UE through the AMF; wherein the second fallback indication information is used to indicate a fallback of the service-specific bearer from the 5G network to the 2G or 3G network or a handover of the service system from the 5G to the 2G or 3G

3. The method according to claim 1, wherein before the receiving (S201) a request information for establishing a service-specific bearer or a handover indication for the service-specific bearer for a user equipment, UE, the method further comprises:
receiving the service support capability indication information of the UE transmitted by an AMF in a registration procedure of the UE;
wherein the receiving the service support capability indication information of the UE transmitted by an AMF comprises:
receiving an N11-Request message transmitted by the AMF and carrying the service support capability indication information of the UE; and
analyzing the N11-Request message to obtain the service support capability indication information of the UE.

4. The method according to claim 1, wherein before the receiving (S201) a request information for establishing a service-specific bearer or a handover indication for the service-specific bearer for a user equipment, UE, the method further comprises:
receiving the service support capability indication information of the UE transmitted by an AMF and/or a Unified Data Management, UDM, in a session establishment procedure for the UE;
wherein the receiving the service support capability indication information of the UE transmitted by an AMF and/or an UDM comprises:
receiving a session management, SM, Request message transmitted by the AMF and carrying the service support capability indication information of the UE, and analyzing the SM Request message to obtain the service support capability indication information of the UE; and/or
receiving a Subscription data response message transmitted by the UDM and carrying the service support capability indication information of the UE, and analyzing the Subscription data response message to obtain the service support capability indication information of the UE.

5. A session management function, SMF, comprising: a first receiving part (1301), an acquiring part (1302) and a first transmitting part (1303); wherein
the first receiving part (1301) is configured to receive a request information for establishing a service-specific bearer or a handover indication for the service-specific bearer for a user equipment, UE; wherein the handover indication for the service-specific bearer is used to indicate a service of which the service-specific bearer needs a handover from fifth Generation mobile communication technology, 5G, to fourth Generation mobile communication technology, 4G, or second Generation mobile communication technology, 2G/third Generation mobile communication technology, 3G, or to indicate a handover of a whole service system from 5G to 4G or 2G/3G;
the acquiring part (1302) is configured to acquire service support capability indication information of the UE from pre-obtained service support capability indication information about the UE; and
the first transmitting part (1303) is configured to transmit a system handover request message for the request information or the handover indication based on the service support capability indication information of the UE.

6. The SMF according to claim 5, wherein the service support capability indication information of the UE comprises: indication information used to indicate that the UE needs a voice service and only supports a Voice over Internet Protocol, VoIP, service, indication information used to indicate that the UE needs the voice service and only supports a circuit switched service, indication information used to indicate that the UE needs the voice service and supports the VoIP service and the circuit switched service, or indication information used to indicate that the UE does not need the voice service, or indication information used to indicate a network bearing an emergency call service;
wherein the first transmitting part (1303) is configured to, when the service support capability indication information of the UE indicates that the UE supports the VoIP service or the indication information used to indicate the network bearing the emergency call service represents that the emergency call service is borne through a 4G network, transmit first fallback indication information to a next generation radio access network, NG-RAN, through a core access and mobility management function, AMF; wherein the first fallback indication information is used to indicate a handover of the service-specific bearer from a 5G network to the 4G network or a handover of the service system from the 5G to the 4G; and
when the service support capability indication information of the UE indicates that the UE only supports the circuit switched service or the indication information used to indicate the network bearing the emergency call service represents that the emergency call service is borne through an 2G/3G network, transmit a second fallback indication information to the UE through the AMF; wherein the second fallback indication information is used to indicate a fallback of the service-specific bearer from the 5G network to the 2G or 3G network or a handover of the service system from the 5G to the 2G or 3G

7. The SMF according to claim 5, wherein the first receiving part (1301) is further configured to receive the service support capability indication information of the UE transmitted by an AMF in a registration procedure of the UE;
wherein the first receiving part (1301) is configured to receive an N11-Request message transmitted by the AMF and carrying the service support capability indication information of the UE; and
analyze the N11-Request message to obtain the service support capability indication information of the UE.

8. The SMF according to claim 5, wherein the first receiving part (1301) is further configured to receive the service support capability indication information of the UE transmitted by an AMF and/or a Unified Data Management, UDM, in a session establishment procedure for the UE;
wherein the first receiving part (1301) is configured to receive a session management, SM, Request message transmitted by the AMF and carrying the service support capability indication information of the UE, and analyze the SM Request message to obtain the service support capability indication information of the UE; and/or
receive a Subscription data response message transmitted by the UDM and carrying the service support capability indication information of the UE, and analyze the Subscription data response message to obtain the service support capability indication information of the UE.

9. A core access and mobility management function, AMF, comprising: a second receiving part (1501) and a second transmitting part (1502); wherein
the second receiving part (1501) is configured to receive service support capability indication information of a user equipment, UE, transmitted by the UE and/or an old AMF in a registration procedure of the UE; or receive the service support capability indication information of the UE transmitted by the UE in a session establishment procedure for the UE; and
the second transmitting part (1502) is configured to transmit the service support capability indication information of the UE to a session management function, SMF; wherein the service support capability indication information of the UE is used for the SMF to perform a system handover when a service-specific bearer is established for the UE.

10. The AMF according to claim 9, wherein the service support capability indication information of the UE comprises: indication information used to indicate that the UE needs a voice service and only supports a Voice over Internet Protocol, VoIP, service, indication information used to indicate that the UE needs the voice service and only supports a circuit switched service, indication information used to indicate that the UE needs the voice service and supports the VoIP service and the circuit switched service, or indication information used to indicate that the UE does not need the voice service, or indication information used to indicate a network bearing an emergency call service.

11. The AMF according to claim 9, wherein the second transmitting part (1502) is configured to transmit the service support capability indication information of the UE transmitted by the UE to the SMF.

12. The AMF according to claim 9, wherein the second receiving part (1501) is configured to receive a Registration Request message transmitted by the UE through a radio access network, RAN, wherein the Registration Request message carries the service support capability indication information of the UE; and/or
receive an Information Response message transmitted by the old AMF, wherein the Information Response message carries the service support capability indication Information of the UE.

13. The AMF according to claim 9, wherein the second receiving part (1501) is configured to transmit an N11-Request message carrying the service support capability indication information of the UE to the SMF, or
wherein the second receiving part (1501) is configured to transmit a session management, SM, Request message carrying the service support capability indication information of the UE to the SMF.

14. The AMF according to claim 9, wherein the second receiving part (1501) is configured to receive a Protocol Data Unit, PDU, Session Establishment Request message transmitted by the UE, wherein the PDU Session Establishment Request message carries the service support capability indication information of the UE.

15. The AMF according to claim 9, wherein the second receiving part (1501) is configured to receive a first fallback indication information transmitted by the SMF, and the second transmitting part (1502) is configured to transmit the first fallback indication information to a next generation radio access network, NG-RAN; wherein the first fallback indication information is used to indicate a fall back of the service-specific bearer from a fifth Generation mobile communication technology, 5G, network to a fourth Generation mobile communication technology, 4G, network or a handover of a service system from 5G to 4G;
or the second receiving part (1501) is configured to receive a second fallback indication information transmitted by the SMF, and the second transmitting part (1502) is configured to transmit the second fallback indication information to the UE; wherein the second fallback indication information is used to indicate a fallback of the service-specific bearer from the 5G network to a second Generation mobile communication technology, 2G, or third Generation mobile communication technology, 3G, network or a handover of the service system from the 5G to the 2G or 3G;
wherein the second receiving part (1501) is further configured to transmit the service support capability indication information of the UE to a mobility management entity, MME;
wherein if the first fallback indication information is received, the service support capability indication information of the UE comprises: indication information used to indicate that the UE needs a voice service and only supports a VoIP service, or indication information used to indicate that the UE needs the voice service and supports the VoIP service and the circuit switched service, or indication information used to indicate a network bearing an emergency call service, which represents that the emergency call service is borne through a 4G network; and
if the second fallback indication information is received, the service support capability indication information of the UE is indication information used to indicate that the UE needs the voice service and only supports a circuit switched service, or indication information used to indicate a network bearing an emergency call service, which represents that the emergency call service is borne through an 2G/3G network.

## Patentansprüche

1. Verfahren zur Dienstträgernetzübergabe, das durch eine Sitzungsmanagementfunktion, SMF, in einer Netzarchitektur der Mobilkommunikationstechnologie der fünften Generation, 5G-Netzarchitektur, ausgeführt wird, wobei das Verfahren Folgendes umfasst:
Empfangen (S201) von Anforderungsinformationen zum Aufbauen eines dienstspezifischen Trägers oder einer Übergabeangabe für den dienstspezifischen Träger für ein Anwendergerät, UE; wobei die Übergabeangabe für den dienstspezifischen Träger verwendet wird, um einen Dienst, für den der dienstspezifische Träger eine Übergabe von 5G zur Mobilkommunikationstechnologie der vierten Generation, 4G, oder zur Mobilkommunikationstechnologie der zweiten Generation, 2G, / Mobilkommunikationstechnologie der dritten Generation, 3G, benötigt, anzugeben oder um eine Übergabe eines gesamten Dienstsystems von 5G zu 4G oder 2G/3G anzugeben;
Erfassen (S202) von Dienstunterstützungsfähigkeits-Angabeinformationen des UE aus im Voraus erhaltenen Dienstunterstützungsfähigkeits-Angabeinformationen über das UE; und
Senden (S203) einer Systemübergabe-Anforderungsnachricht für die Anforderungsinformationen oder die Übergabeangabe basierend auf den Dienstunterstützungsfähigkeits-Angabeinformationen des UE.

2. Verfahren nach Anspruch 1, wobei die Dienstunterstützungsfähigkeits-Angabeinformationen des UE Folgendes umfassen: Angabeinformationen, die verwendet werden, um anzugeben, dass das UE einen Sprachdienst benötigt und nur einen Dienst nach dem Sprache-Über-Internetprotokoll, VoIP-Dienst, unterstützt, Angabeinformationen, die verwendet werden, um anzugeben, dass das UE den Sprachdienst benötigt und nur einen leitungsvermittelten Dienst unterstützt, Angabeinformationen, die verwendet werden, um anzugeben, dass das UE den Sprachdienst benötigt und den VoIP-Dienst und den leitungsvermittelten Dienst unterstützt, oder Angabeinformationen, die verwendet werden, um anzugeben, dass das UE den Sprachdienst nicht benötigt, oder Angabeinformationen, die verwendet werden, um anzugeben, dass ein Netz einen Notrufdienst trägt;
wobei das Senden einer Systemübergabe-Anforderungsnachricht für die Anforderungsinformationen oder die Übergabeangabe basierend auf den Dienstunterstützungsfähigkeits-Angabeinformationen des UE (S203) Folgendes umfasst:
wenn die Dienstunterstützungsfähigkeits-Angabeinformationen des UE angeben, dass das UE den VoIP-Dienst unterstützt, oder die Angabeinformationen, die verwendet werden, um anzugeben, dass das Netz den Notrufdienst trägt, repräsentieren, dass die Notrufdienst über ein 4G-Netz getragen wird, Senden erster Rückfallangabeinformationen zu einem Funkzugangsnetz der nächsten Generation, NG-RAN, über eine Kernzugangs- und Mobilitätsmanagementfunktion, AMF; wobei die ersten Rückfallangabeinformationen verwendet werden, um eine Übergabe des dienstspezifischen Trägers von einem 5G-Netz zu dem 4G-Netz oder eine Übergabe des Dienstsystems von 5G zu 4G anzugeben; und
wenn die Dienstunterstützungsfähigkeits-Angabeinformationen des UE angeben, dass das UE nur den leitungsvermittelten Dienst unterstützt oder die Angabeinformationen, die verwendet werden, um anzugeben, dass das Netz den Notrufdienst trägt, repräsentieren, dass der Notrufdienst über ein 2G/3G-Netz getragen wird, Senden zweiter Rückfallangabeinformationen an das UE über die AMF; wobei die zweiten Rückfallangabeinformationen verwendet werden, um einen Rückfall des dienstspezifischen Trägers von einem 5G-Netz zu dem 2G- oder 3G-Netz oder eine Übergabe des Dienstsystems von 5G zu 2G oder 3G anzugeben.

3. Verfahren nach Anspruch 1, wobei das Verfahren vor dem Empfangen (S201) von Anforderungsinformationen zum Aufbauen eines dienstspezifischen Trägers oder einer Übergabeangabe für den dienstspezifischen Träger für ein Anwendergerät, UE, ferner Folgendes umfasst:
Empfangen der Dienstunterstützungsfähigkeits-Angabeinformationen des UE, die durch eine AMF in einer Registrierungsprozedur des UE gesendet werden;
wobei das Empfangen der durch eine AMF gesendeten Dienstunterstützungsfähigkeits-Angabeinformationen des UE Folgendes umfasst:
Empfangen einer N11-Anforderungsnachricht, die durch die AMF gesendet wird und die Dienstunterstützungsfähigkeits-Angabeinformationen des UE führt; und
Analysieren der N11-Anforderungsnachricht, um die Dienstunterstützungsfähigkeits-Angabeinformationen des UE zu erhalten.

4. Verfahren nach Anspruch 1, wobei das Verfahren vor dem Empfangen (S201) von Anforderungsinformationen zum Aufbauen eines dienstspezifischen Trägers oder einer Übergabeangabe für den dienstspezifischen Träger für ein Anwendergerät, UE, ferner Folgendes umfasst:
Empfangen der Dienstunterstützungsfähigkeits-Angabeinformationen des UE, die durch eine AMF und/oder ein vereinheitlichtes Datenmanagement, UDM, in einer Sitzungsaufbauprozedur für das UE gesendet werden;
wobei das Empfangen der durch eine AMF und/oder ein UDM gesendeten Dienstunterstützungsfähigkeits-Angabeinformationen des UE Folgendes umfasst:
Empfangen einer Sitzungsmanagement-Anforderungsnachricht, SM-Anforderungsnachricht, die durch die AMF gesendet wird und die Dienstunterstützungsfähigkeits-Angabeinformationen des UE führt, und Analysieren der SM-Anforderungsnachricht, um die Dienstunterstützungsfähigkeits-Angabeinformationen des UE zu erhalten; und/oder
Empfangen einer Abonnementsdatenantwortnachricht, die durch das UDM gesendet wird und die Dienstunterstützungsfähigkeits-Angabeinformationen des UE führt, und Analysieren der Abonnementsdatenantwortnachricht, um die Dienstunterstützungsfähigkeits-Angabeinformationen des UE zu erhalten.

5. Sitzungsmanagementfunktion, SMF, die Folgendes umfasst: einen ersten Empfangsabschnitt (1301), einen Erfassungsabschnitt (1302) und einen ersten Sendeabschnitt (1303); wobei
der erste Empfangsabschnitt (1301) konfiguriert ist, Anforderungsinformationen zum Aufbauen eines dienstspezifischen Trägers oder eine Übergabeangabe für den dienstspezifischen Träger für ein Anwendergerät, UE, zu empfangen; wobei die Übergabeangabe für den dienstspezifischen Träger verwendet wird, um einen Dienst, für den der dienstspezifische Träger eine Übergabe von der Mobilkommunikationstechnologie der fünften Generation, 5G, zu der Mobilkommunikationstechnologie der vierten Generation, 4G, oder zu der Mobilkommunikationstechnologie der zweiten Generation, 2G, / Mobilkommunikationstechnologie der dritten Generation, 3G, benötigt, anzugeben oder um eine Übergabe eines gesamten Dienstsystems von 5G zu 4G oder 2G/3G anzugeben;
der Erfassungsabschnitt (1302) konfiguriert ist, Dienstunterstützungsfähigkeits-Angabeinformationen des UE aus im Voraus erhaltenen Dienstunterstützungsfähigkeits-Angabeinformationen über das UE zu erfassen; und
der erste Sendeabschnitt (1303) konfiguriert ist, eine Systemübergabe-Anforderungsnachricht für die Anforderungsinformationen oder die Übergabeangabe basierend auf den Dienstunterstützungsfähigkeits-Angabeinformationen des UE zu senden.

6. SMF nach Anspruch 5, wobei die Dienstunterstützungsfähigkeits-Angabeinformationen des UE Folgendes umfassen: Angabeinformationen, die verwendet werden, um anzugeben, dass das UE einen Sprachdienst benötigt und nur einen Dienst nach dem Sprache-Über-Internetprotokoll, VoIP-Dienst, unterstützt, Angabeinformationen, die verwendet werden, um anzugeben, dass das UE den Sprachdienst benötigt und nur einen leitungsvermittelten Dienst unterstützt, Angabeinformationen, die verwendet werden, um anzugeben, dass das UE den Sprachdienst benötigt und den VoIP-Dienst und den leitungsvermittelten Dienst unterstützt, oder Angabeinformationen, die verwendet werden, um anzugeben, dass das UE den Sprachdienst nicht benötigt, oder Angabeinformationen, die verwendet werden, um anzugeben, dass ein Netz einen Notrufdienst trägt;
wobei der erste Sendeabschnitt (1303) konfiguriert ist, dann, wenn die Dienstunterstützungsfähigkeits-Angabeinformationen des UE angeben, dass das UE den VoIP-Dienst unterstützt, oder die Angabeinformationen, die verwendet werden, um anzugeben, dass das Netz den Notrufdienst führt, repräsentieren, dass die Notrufdienst über ein 4G-Netz getragen wird, erste Rückfallangabeinformationen zu einem Funkzugangsnetz der nächsten Generation, NG-RAN, über eine Kernzugangs- und Mobilitätsmanagementfunktion, AMF, zu senden; wobei die ersten Rückfallangabeinformationen verwendet werden, um eine Übergabe des dienstspezifischen Trägers von einem 5G-Netz zu dem 4G-Netz oder eine Übergabe des Dienstsystems von 5G zu 4G anzugeben; und
wenn die Dienstunterstützungsfähigkeits-Angabeinformationen des UE angeben, dass das UE nur den leitungsvermittelten Dienst unterstützt oder die Angabeinformationen, die verwendet werden, um anzugeben, dass das Netz den Notrufdienst trägt, repräsentieren, dass der Notrufdienst über ein 2G/3G-Netz getragen wird, zweite Rückfallangabeinformationen an das UE über die AMF zu senden; wobei die zweiten Rückfallangabeinformationen verwendet werden, um einen Rückfall des dienstspezifischen Trägers von einem 5G-Netz zu dem 2G- oder 3G-Netz oder eine Übergabe des Dienstsystems von 5G zu 2G oder 3G anzugeben.

7. SMF nach Anspruch 5, wobei der erste Empfangsabschnitt (1301) ferner konfiguriert ist, die Dienstunterstützungsfähigkeits-Angabeinformationen des UE, die durch eine AMF in einer Registrierungsprozedur des UE gesendet werden, zu empfangen;
wobei der erste Empfangsabschnitt (1301) konfiguriert ist, eine N11-Anforderungsnachricht, die durch die AMF gesendet wird und die Dienstunterstützungsfähigkeits-Angabeinformationen des UE führt, zu empfangen; und
die N11-Anforderungsnachricht zu analysieren, um die Dienstunterstützungsfähigkeits-Angabeinformationen des UE zu erhalten.

8. SMF nach Anspruch 5, wobei der erste Empfangsabschnitt (1301) ferner konfiguriert ist, die Dienstunterstützungsfähigkeits-Angabeinformationen des UE, die durch eine AMF und/oder ein vereinheitlichtes Datenmanagement, UDM, in einer Sitzungsaufbauprozedur für das UE gesendet werden, zu empfangen;
wobei der erste Empfangsabschnitt (1301) konfiguriert ist, eine Sitzungsmanagement-Anforderungsnachricht, SM-Anforderungsnachricht, die durch die AMF gesendet wird und die Dienstunterstützungsfähigkeits-Angabeinformationen des UE führt, zu empfangen und die SM-Anforderungsnachricht zu analysieren, um die Dienstunterstützungsfähigkeits-Angabeinformationen des UE zu erhalten; und/oder
eine Abonnementsdatenantwortnachricht, die durch das UDM gesendet wird und die Dienstunterstützungsfähigkeits-Angabeinformationen des UE führt, zu empfangen und die Abonnementsdatenantwortnachricht zu analysieren, um die Dienstunterstützungsfähigkeits-Angabeinformationen des UE zu erhalten.

9. Kernzugangs- und Mobilitätsmanagementfunktion, AMF, die Folgendes umfasst: einen zweiten Empfangsabschnitt (1501) und einen zweiten Sendeabschnitt (1502); wobei
der zweite Empfangsabschnitt (1501) konfiguriert ist, Dienstunterstützungsfähigkeits-Angabeinformationen eines Anwendergeräts, UE, die durch das UE und/oder eine alte AMF in einer Registrierungsverfahren des UE gesendet werden, zu empfangen; oder die Dienstunterstützungsfähigkeits-Angabeinformationen des UE, die durch das UE in einer Sitzungsaufbauprozedur für das UE gesendet werden, zu empfangen; und
der zweite Sendeabschnitt (1502) konfiguriert ist, die Dienstunterstützungsfähigkeits-Angabeinformationen des UE an eine Sitzungsmanagementfunktion, SMF, zu senden; wobei die Dienstunterstützungsfähigkeits-Angabeinformationen des UE verwendet werden, damit die SMF eine Systemübergabe ausführt, wenn ein dienstspezifischer Träger für das UE aufgebaut wird.

10. AMF nach Anspruch 9, wobei die Dienstunterstützungsfähigkeits-Angabeinformationen des UE Folgendes umfassen: Angabeinformationen, die verwendet werden, um anzugeben, dass das UE einen Sprachdienst benötigt und nur einen Dienst nach dem Sprache-Über-Internetprotokoll, VoIP-Dienst, unterstützt, Angabeinformationen, die verwendet werden, um anzugeben, dass das UE den Sprachdienst benötigt und nur einen leitungsvermittelten Dienst unterstützt, Angabeinformationen, die verwendet werden, um anzugeben, dass das UE den Sprachdienst benötigt und den VoIP-Dienst und den leitungsvermittelten Dienst unterstützt, oder Angabeinformationen, die verwendet werden, um anzugeben, dass das UE den Sprachdienst nicht benötigt, oder Angabeinformationen, die verwendet werden, um anzugeben, dass ein Netz einen Notrufdienst trägt.

11. AMF nach Anspruch 9, wobei der zweite Sendeabschnitt (1502) konfiguriert ist, die durch das UE gesendeten Dienstunterstützungsfähigkeits-Angabeinformationen des UE, an die SMF zu senden.

12. AMF nach Anspruch 9, wobei der zweite Empfangsabschnitt (1501) konfiguriert ist, eine durch das UE über ein Funkzugangsnetz, RAN, gesendete Registrierungsanforderungsnachricht zu empfangen, wobei die Registrierungsanforderungsnachricht die Dienstunterstützungsfähigkeits-Angabeinformationen des UE führt; und/oder
eine durch eine alte AMF gesendete Informationsantwortnachricht zu empfangen, wobei die Informationsantwortnachricht die Dienstunterstützungsfähigkeits-Angabeinformationen des UE führt.

13. AMF nach Anspruch 9, wobei der zweite Empfangsabschnitt (1501) konfiguriert ist, eine N11-Anforderungsnachricht, die die Dienstunterstützungsfähigkeits-Angabeinformationen des UE führt, an die SMF zu senden, oder
wobei der zweite Empfangsabschnitt (1501) konfiguriert ist, eine Sitzungsmanagement-Anforderungsnachricht, SM-Anforderungsnachricht, die die Dienstunterstützungsfähigkeits-Angabeinformationen des UE führt, an die SMF zu senden.

14. AMF nach Anspruch 9, wobei der zweite Empfangsabschnitt (1501) konfiguriert ist, eine durch das UE gesendete Protokolldateneinheit-Sitzungsaufbauanforderungsnachricht, PDU-Sitzungsaufbauanforderungsnachricht, zu empfangen, wobei die PDU-Sitzungsaufbauanforderungsnachricht die Dienstunterstützungsfähigkeits-Angabeinformationen des UE führt.

15. AMF nach Anspruch 9, wobei der zweite Empfangsabschnitt (1501) konfiguriert ist, durch die SMF gesendete erste Rückfallangabeinformationen zu empfangen, und der zweite Sendeabschnitt (1502) konfiguriert ist, die ersten Rückfallangabeinformationen an ein Funkzugangsnetz der nächsten Generation, NG-RAN, zu senden; wobei die ersten Rückfallangabeinformationen verwendet werden, um einen Rückfall des dienstspezifischen Trägers von einem Netz der Mobilkommunikationstechnologie der fünften Generation, 5G-Netz, zu einem Netz der Mobilkommunikationstechnologie der vierten Generation, 4G-Netz, oder eine Übergabe eines Dienstsystems von 5G zu 4G anzugeben;
oder der zweite Empfangsabschnitt (1501) konfiguriert ist, durch die SMF gesendete zweite Rückfallangabeinformationen zu empfangen, und der zweite Sendeabschnitt (1502) konfiguriert ist, die zweiten Rückfallangabeinformationen an das UE zu senden; wobei die zweiten Rückfallangabeinformationen verwendet werden, um einen Rückfall des dienstspezifischen Trägers von dem 5G-Netz zu einem Netz der Mobilkommunikationstechnologie der zweiten Generation, 2G, oder der Mobilkommunikationstechnologie der dritten Generation, 3G, oder eine Übergabe des Dienstsystems von 5G zu 2G oder 3G anzugeben:
wobei der zweite Empfangsabschnitt (1501) ferner konfiguriert ist, die Dienstunterstützungsfähigkeits-Angabeinformationen des UE an eine Mobilitätsmanagemententität, MME, zu senden;
wobei dann, wenn die ersten Rückfallangabeinformationen empfangen werden, die Dienstunterstützungsfähigkeits-Angabeinformationen des UE Folgendes umfassen: Angabeinformationen, die verwendet werden, um anzugeben, dass das UE einen Sprachdienst benötigt und nur einen VoIP-Dienst unterstützt, oder Angabeinformationen, die verwendet werden, um anzugeben, dass das UE den Sprachdienst benötigt und den VoIP-Dienst und den leitungsvermittelten Dienst unterstützt, oder Angabeinformationen, die verwendet werden, um anzugeben, dass ein Netz einen Notrufdienst trägt, was repräsentiert, dass der Notrufdienst über ein 4G-Netz getragen wird; und
falls die zweiten Rückfallangabeinformationen empfangen werden, die Dienstunterstützungsfähigkeits-Angabeinformationen des UE Angabeinformationen, die verwendet werden, um anzugeben, dass das UE den Sprachdienst benötigt und nur einen leitungsvermittelten Dienst unterstützt, oder Angabeinformationen, die verwendet werden, um anzugeben, dass ein Netz einen Notrufdienst trägt, was repräsentiert, dass der Notrufdienst über ein 2G/3G-Netz getragen wird, sind.

## Revendications

1. Procédé pour un transfert de réseau support de service, réalisé par une fonction de gestion de session, notée SMF, dans une architecture de réseau de la technologie de communication mobile de cinquième génération, notée 5G, le procédé comprenant :
la réception (S201) d'une information de requête pour l'établissement d'un support propre à un service ou d'une indication de transfert pour le support propre à un service pour un équipement utilisateur, noté UE ; l'indication de transfert pour le support propre à un service servant à indiquer un service pour lequel le support propre à un service nécessite un transfert depuis la 5G vers la technologie de communication mobile de quatrième génération, notée 4G, ou la technologie de communication mobile de deuxième génération, notée 2G / la technologie de communication mobile de troisième génération, notée 3G, ou pour indiquer un transfert d'un système de service complet de la 5G vers la 4G ou la 2G/3G ;
l'acquisition (S202) d'informations d'indication de capacité de prise en charge de service de l'UE à partir d'informations d'indication de capacité de prise en charge de service concernant l'UE, préalablement obtenues ; et
la transmission (S203) d'un message de requête de transfert de système pour l'information de requête ou l'indication de transfert sur la base des informations d'indication de capacité de prise en charge de service de l'UE.

2. Procédé selon la revendication 1, dans lequel les informations d'indication de capacité de prise en charge de service de l'UE comprennent : des informations d'indication servant à indiquer que l'UE nécessite un service vocal et prend uniquement en charge un service Voix sur Protocole Internet, notée VoIP, des informations d'indication servant à indiquer que l'UE nécessite le service vocal et prend uniquement en charge un service à commutation de circuits, des informations d'indication servant à indiquer que l'UE nécessite le service vocal et prend en charge le service VoIP et le service à commutation de circuits, ou des informations d'indication servant à indiquer que l'UE ne nécessite pas le service vocal, ou des informations d'indication servant à indiquer un réseau supportant un service d'appel d'urgence ;
la transmission d'un message de requête de transfert de système pour l'information de requête ou l'indication de transfert sur la base des informations d'indication de capacité de prise en charge de service de l'UE (S203) comprenant :
lorsque les informations d'indication de capacité de prise en charge de service de l'UE indiquent que l'UE prend en charge le service VoIP ou les informations d'indication servant à indiquer le réseau supportant le service d'appel d'urgence indiquent que le service d'appel d'urgence est supporté par un réseau 4G, la transmission d'une première information d'indication de repli à un réseau d'accès radio de prochaine génération, noté NG-RAN, au moyen d'une fonction de gestion de l'accès et de la mobilité, notée AMF, dans le cœur de réseau ; la première information d'indication de repli servant à indiquer un transfert du support propre à un service depuis un réseau 5G vers le réseau 4G ou un transfert du système de service depuis la 5G vers la 4G ; et
lorsque les informations d'indication de capacité de prise en charge de service de l'UE indiquent que l'UE prend uniquement en charge le service à commutation de circuits ou les informations d'indication servant à indiquer le réseau supportant le service d'appel d'urgence indiquent que le service d'appel d'urgence est supporté par un réseau 2G/3G, la transmission d'une deuxième information d'indication de repli à l'UE au moyen de l'AMF ; la deuxième information d'indication de repli servant à indiquer un repli du support propre à un service depuis le réseau 5G vers le réseau 2G ou 3G ou un transfert du système de service depuis la 5G vers la 2G ou la 3G.

3. Procédé selon la revendication 1, le procédé comprenant en outre, avant la réception (S201), d'une information de requête pour l'établissement d'un support propre à un service ou d'une indication de transfert pour le support propre à un service pour un équipement utilisateur, UE :
la réception des informations d'indication de capacité de prise en charge de service de l'UE transmises par une AMF dans une procédure d'enregistrement de l'UE ;
la réception des informations d'indication de capacité de prise en charge de service de l'UE transmises par une AMF comprenant :
la réception d'un message de Requête N11 transmis par l'AMF et véhiculant les informations d'indication de capacité de prise en charge de service de l'UE ; et
l'analyse du message de Requête N11 dans le but d'obtenir les informations d'indication de capacité de prise en charge de service de l'UE.

4. Procédé selon la revendication 1, le procédé comprenant en outre, avant la réception (S201) d'une information de requête pour l'établissement d'un support propre à un service ou d'une indication de transfert pour le support propre à un service pour un équipement utilisateur, UE :
la réception des informations d'indication de capacité de prise en charge de service de l'UE transmises par une AMF et/ou une Gestion Unifiée de Données, notée UDM, dans une procédure d'établissement de session pour l'UE ;
la réception des informations d'indication de capacité de prise en charge de service de l'UE transmises par une AMF et/ou une UDM comprenant :
la réception d'un message de Requête de gestion de session, notée SM, transmis par l'AMF et véhiculant les informations d'indication de capacité de prise en charge de service de l'UE, et l'analyse du message de Requête de SM dans le but d'obtenir les informations d'indication de capacité de prise en charge de service de l'UE ; et/ou
la réception d'un message de réponse de données de Souscription transmis par l'UDM et véhiculant les informations d'indication de capacité de prise en charge de service de l'UE, et l'analyse du message de réponse de données de Souscription dans le but d'obtenir les informations d'indication de capacité de prise en charge de service de l'UE.

5. Fonction de gestion de session, notée SMF, comprenant : un premier module de réception (1301), un module d'acquisition (1302) et un premier module de transmission (1303) ;
le premier module de réception (1301) étant configuré pour recevoir une information de requête pour l'établissement d'un support propre à un service ou une indication de transfert pour le support propre à un service pour un équipement utilisateur, noté UE ; l'indication de transfert pour le support propre à un service servant à indiquer un service pour lequel le support propre à un service nécessite un transfert depuis la technologie de communication mobile de cinquième génération, notée 5G, vers la technologie de communication mobile de quatrième génération, notée 4G, ou la technologie de communication mobile de deuxième génération, notée 2G / la technologie de communication mobile de troisième génération, notée 3G, ou pour indiquer un transfert d'un système de service complet de la 5G vers la 4G ou la 2G/3G ;
le module d'acquisition (1302) étant configuré pour acquérir des informations d'indication de capacité de prise en charge de service de l'UE à partir d'informations d'indication de capacité de prise en charge de service concernant l'UE préalablement obtenues ; et
le premier module de transmission (1303) étant configuré pour transmettre un message de requête de transfert de système pour l'information de requête ou l'indication de transfert sur la base des informations d'indication de capacité de prise en charge de service de l'UE.

6. SMF selon la revendication 5, dans laquelle les informations d'indication de capacité de prise en charge de service de l'UE comprennent : des informations d'indication servant à indiquer que l'UE nécessite un service vocal et prend uniquement en charge un service Voix sur Protocole Internet, notée VoIP, des informations d'indication servant à indiquer que l'UE nécessite le service vocal et prend uniquement en charge un service à commutation de circuits, des informations d'indication servant à indiquer que l'UE nécessite le service vocal et prend en charge le service VoIP et le service à commutation de circuits, ou des informations d'indication servant à indiquer que l'UE ne nécessite pas le service vocal, ou des informations d'indication servant à indiquer un réseau supportant un service d'appel d'urgence ;
le premier module de transmission (1303) étant configuré pour, lorsque les informations d'indication de capacité de prise en charge de service de l'UE indiquent que l'UE prend en charge le service VoIP ou les informations d'indication servant à indiquer le réseau supportant le service d'appel d'urgence indiquent que le service d'appel d'urgence est supporté par un réseau 4G, transmettre une première information d'indication de repli à un réseau d'accès radio de prochaine génération, noté NG-RAN, au moyen d'une fonction de gestion de l'accès et de la mobilité, notée AMF, dans le cœur de réseau ; la première information d'indication de repli servant à indiquer un transfert du support propre à un service depuis un réseau 5G vers le réseau 4G ou un transfert du système de service depuis la 5G vers la 4G ; et
lorsque les informations d'indication de capacité de prise en charge de service de l'UE indiquent que l'UE prend uniquement en charge le service à commutation de circuits ou les informations d'indication servant à indiquer le réseau supportant le service d'appel d'urgence indiquent que le service d'appel d'urgence est supporté par un réseau 2G/3G, transmettre une deuxième information d'indication de repli à l'UE au moyen de l'AMF ; la deuxième information d'indication de repli servant à indiquer un repli du support propre à un service depuis le réseau 5G vers le réseau 2G ou 3G ou un transfert du système de service depuis la 5G vers la 2G ou la 3G.

7. SMF selon la revendication 5, dans laquelle le premier module de réception (1301) est configuré en outre pour recevoir les informations d'indication de capacité de prise en charge de service de l'UE transmises par une AMF dans une procédure d'enregistrement de l'UE ;
le premier module de réception (1301) étant configuré pour recevoir un message de Requête N11 transmis par l'AMF et véhiculant les informations d'indication de capacité de prise en charge de service de l'UE ; et
analyser le message de Requête N11 dans le but d'obtenir les informations d'indication de capacité de prise en charge de service de l'UE.

8. SMF selon la revendication 5, dans laquelle le premier module de réception (1301) est configuré en outre pour recevoir les informations d'indication de capacité de prise en charge de service de l'UE transmises par une AMF et/ou une Gestion Unifiée de Données, notée UDM, dans une procédure d'établissement de session pour l'UE ;
le premier module de réception (1301) étant configuré pour recevoir un message de Requête de gestion de session, notée SM, transmis par l'AMF et véhiculant les informations d'indication de capacité de prise en charge de service de l'UE, et analyser le message de Requête de SM dans le but d'obtenir les informations d'indication de capacité de prise en charge de service de l'UE ; et/ou
recevoir un message de réponse de données de Souscription transmis par l'UDM et véhiculant les informations d'indication de capacité de prise en charge de service de l'UE, et analyser le message de réponse de données de Souscription dans le but d'obtenir les informations d'indication de capacité de prise en charge de service de l'UE.

9. Fonction de gestion de l'accès et de la mobilité, notée AMF, dans le cœur de réseau, comprenant : un deuxième module de réception (1501) et un deuxième module de transmission (1502) ;
le deuxième module de réception (1501) étant configuré pour recevoir des informations d'indication de capacité de prise en charge de service d'un équipement utilisateur, noté UE, et/ou une ancienne AMF dans une procédure d'enregistrement de l'UE ; ou recevoir les informations d'indication de capacité de prise en charge de service de l'UE transmises par l'UE dans une procédure d'établissement de session pour l'UE ; et
le deuxième module de transmission (1502) étant configuré pour transmettre les informations d'indication de capacité de prise en charge de service de l'UE à une fonction de gestion de session, notée SMF ; les informations d'indication de capacité de prise en charge de service de l'UE permettant à la SMF de réaliser un transfert de système lorsqu'un support propre à un service est établi pour l'UE.

10. AMF selon la revendication 9, dans laquelle les informations d'indication de capacité de prise en charge de service de l'UE comprennent : des informations d'indication servant à indiquer que l'UE nécessite un service vocal et prend uniquement en charge un service Voix sur Protocole Internet, notée VoIP, des informations d'indication servant à indiquer que l'UE nécessite le service vocal et prend uniquement en charge un service à commutation de circuits, des informations d'indication servant à indiquer que l'UE nécessite le service vocal et prend en charge le service VoIP et le service à commutation de circuits, ou des informations d'indication servant à indiquer que l'UE ne nécessite pas le service vocal, ou des informations d'indication servant à indiquer un réseau supportant un service d'appel d'urgence.

11. AMF selon la revendication 9, dans laquelle le deuxième module de transmission (1502) est configuré pour transmettre les informations d'indication de capacité de prise en charge de service de l'UE transmises par l'UE à la SMF.

12. AMF selon la revendication 9, dans laquelle le deuxième module de réception (1501) est configuré pour recevoir un message de Requête d'Enregistrement transmis par l'UE au moyen d'un réseau d'accès radio, noté RAN, le message de Requête d'Enregistrement véhiculant les informations d'indication de capacité de prise en charge de service de l'UE ; et/ou
recevoir un message de Réponse d'Information transmis par l'ancienne AMF, le message de Réponse d'Information véhiculant les informations d'indication de capacité de prise en charge de service de l'UE.

13. AMF selon la revendication 9, dans laquelle le deuxième module de réception (1501) est configuré pour transmettre un message de Requête N11 véhiculant les informations d'indication de capacité de prise en charge de service de l'UE à la SMF, ou
dans lequel le deuxième module de réception (1501) est configuré pour transmettre un message de Requête de gestion de session, notée SM, véhiculant les informations d'indication de capacité de prise en charge de service de l'UE à la SMF.

14. AMF selon la revendication 9, dans laquelle le deuxième module de réception (1501) est configuré pour recevoir un message de Requête d'Établissement de Session d'Unité de Données de Protocole, notée PDU, transmis par l'UE, le message de Requête d'Établissement de Session de PDU véhiculant les informations d'indication de capacité de prise en charge de service de l'UE.

15. AMF selon la revendication 9, dans laquelle le deuxième module de réception (1501) est configuré pour recevoir une première information d'indication de repli transmise par la SMF, et le deuxième module de transmission (1502) est configuré pour transmettre la première information d'indication de repli à un réseau d'accès radio de prochaine génération, noté NG-RAN ; la première information d'indication de repli servant à indiquer un repli du support propre à un service depuis un réseau de la technologie de communication mobile de cinquième génération, notée 5G, vers un réseau de la technologie de communication mobile de quatrième génération, notée 4G, ou un transfert d'un système de service de la 5G vers la 4G ;
ou le deuxième module de réception (1501) est configuré pour recevoir une deuxième information d'indication de repli transmise par la SMF, et le deuxième module de transmission (1502) est configuré pour transmettre la deuxième information d'indication de repli à l'UE ; la deuxième information d'indication de repli servant à indiquer un repli du support propre à un service depuis le réseau 5G vers un réseau de la technologie de communication mobile de deuxième génération, notée 2G, ou de la technologie de communication mobile de troisième génération, notée 3G, ou un transfert du système de service de la 5G vers la 2G ou 3G ;
le deuxième module de réception (1501) étant configuré en outre pour transmettre les informations d'indication de capacité de prise en charge de service de l'UE à une entité de gestion de la mobilité, notée MME ;
en cas de réception de la première information d'indication de repli, les informations d'indication de capacité de prise en charge de service de l'UE comprenant : des informations d'indication servant à indiquer que l'UE nécessite un service vocal et prend uniquement en charge un service VoIP, ou des informations d'indication servant à indiquer que l'UE nécessite le service vocal et prend en charge le service VoIP et le service à commutation de circuits, ou des informations d'indication servant à indiquer un réseau supportant un service d'appel d'urgence, qui indiquent que le service d'appel d'urgence est supporté par un réseau 4G ; et
en cas de réception de la deuxième information d'indication de repli, les informations d'indication de capacité de prise en charge de service de l'UE étant des informations d'indication servant à indiquer que l'UE nécessite le service vocal et prend uniquement en charge un service à commutation de circuits, ou des informations d'indication servant à indiquer un réseau supportant un service d'appel d'urgence, qui indiquent que le service d'appel d'urgence est supporté par un réseau 2G/3G.
